(19) Europäisches Patentamt / European Patent Office / Office européen des brevets

(11) **EP 4 761 261 A1**

(12) **EUROPEAN PATENT APPLICATION**


(43) Date of publication:
**17.06.2026 Bulletin 2026/25**

(21) Application number: **25215731.8**

(22) Date of filing: **13.11.2025**

(51) International Patent Classification (IPC):
***H04N 23/63*** *(2023.01)* ***H04N 23/60*** *(2023.01)*
***H04N 23/661*** *(2023.01)* ***H04N 23/69*** *(2023.01)*
***H04N 23/695*** *(2023.01)*

(52) Cooperative Patent Classification (CPC):
**H04N 23/695; H04N 23/631; H04N 23/633; H04N 23/64; H04N 23/661; H04N 23/69**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.12.2024 JP 2024218473**



(71) Applicant: **Canon Kabushiki Kaisha**
**Tokyo, 146-8501 (JP)**

(72) Inventor: **YOSHIZAKI, Reina**
**Tokyo, 146-8501 (JP)**

(74) Representative: **Canon Europe Limited**
**European Intellectual Property Group**
**4 Roundwood Avenue**
**Stockley Park**
**Uxbridge UB11 1AF (GB)**


(54) **INFORMATION PROCESSING APPARATUS, METHOD, PROGRAM, AND DATA CARRIER**


(57) An information processing apparatus (200) includes a display control unit (227) which performs control to simultaneously display first information indicating transition information of pan and tilt angles of an image capturing apparatus capable of pan and tilt drive and second information indicating information of a temporal transition of the pan angle and information of a temporal transition of the tilt angle, an acquisition unit which acquires correction information on any of the first information or the second information, and an update unit (224) which updates the first information or the second information based on the correction information, in which when the correction information indicates a correction on the first information, the display control unit causes the second information, after being updated, to be displayed, and when the correction information indicates a correction on the second information, the display control unit causes the first information, after being updated, to be displayed.


FIG. 4

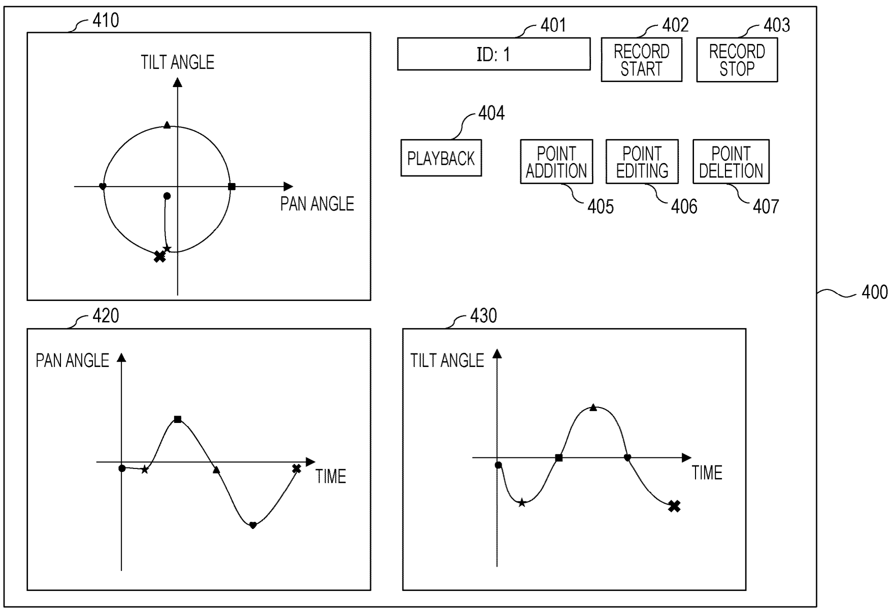





EP 4 761 261 A1

## Description

TECHNICAL FIELD

The present disclosure relates to an information processing apparatus, a method, a program, and a data carrier.

BACKGROUND

In recent years, network cameras capable of controlling an image capturing apparatus from a remote place and control apparatuses for video production have been widely used. Examples of such remote control of the image capturing apparatus include pan, tilt, and zoom operations and a preset operation of registering a shooting location and a setting in advance and then recalling the shooting location and the setting. In addition, examples of the control include a trace operation and the like of recording, as trace information, execution contents and execution timings of a series of camera operations in a predetermined period and executing the control of the image capturing apparatus by referring to the trace information.

When the trace information is to be recorded, in a case where desired trace information is not recorded, an issue has been raised that the operation is to be redone including even a successful part from the beginning.

In view of the above, Japanese Patent Laid-Open Publication No. 2023-117195 describes a technique of correcting trace information by correcting a graph representing a trajectory of an image capturing apparatus based on the trace information.

However, according to a method described in Japanese Patent Laid-Open Publication No. 2023-117195, the trace information is not to be edited while a trace trajectory and time information are being checked.

SUMMARY

The present disclosure in its first aspect provides an information processing apparatus as specified in claim 1. Optional features are specified in claims 2 to 17. These optional features of the first aspect are also optional features of the other aspects of the present disclosure.

The present disclosure in its second aspect provides a method as specified in claim 18.

The present disclosure in its third aspect provides a program as specified in claim 19.

The present disclosure in its fourth aspect provides a data carrier as specified in claim 20.

Features of the present disclosure will become apparent from the following description of embodiments with reference to the attached drawings. The following description of embodiments is described by way of example.

BRIEF DESCRIPTION OF THE DRAWINGS

Fig. 1 illustrates a system configuration according to a first embodiment.
Fig. 2 illustrates a hardware configuration of an image capturing apparatus and an information processing apparatus according to the first embodiment.
Fig. 3 illustrates a functional block of the information processing apparatus according to the first embodiment.
Fig. 4 illustrates an example of a GUI according to the first embodiment.
Fig. 5 illustrates an example of trace information according to the first embodiment.
Fig. 6 is a flowchart illustrating a flow of control according to the first embodiment.
Fig. 7 illustrates an example of a GUI according to the first embodiment.
Fig. 8 illustrates an example of a GUI when trace information is edited according to the first embodiment.
Fig. 9 illustrates an example of a trajectory line graph according to the first embodiment.
Fig. 10 is a flowchart illustrating a flow of control according to a second embodiment.
Fig. 11 illustrates an example of trace information according to the second embodiment.
Fig. 12 illustrates an example of a GUI according to a third embodiment.
Fig. 13 is a flowchart illustrating a flow of control according to the third embodiment.
Fig. 14 is a flowchart illustrating a flow of control according to the third embodiment.
Fig. 15 is a flowchart illustrating a flow of control according to a fourth embodiment.
Fig. 16 illustrates an example of a GUI according to the fourth embodiment.

DESCRIPTION OF THE EMBODIMENTS

Hereinafter, embodiments will be described in detail with reference to the accompanying drawings. It is noted that the following embodiments are not limiting a disclosure according to claims. A plurality of features are described in the embodiments, but not all of the plurality of these features are necessarily essential to the disclosure, and the plurality of features may be optionally combined. Furthermore, the same reference sign is allocated to the same or similar configuration in the accompanying drawings, and duplicated descriptions will be omitted.

First Embodiment

System Configuration

Fig. 1 illustrates a configuration example of an image capturing system including a control apparatus of the present embodiment. A system according to a first embodiment includes an image capturing apparatus 100 and an information processing apparatus 200.
The image capturing apparatus 100 and the information processing apparatus 200 are mutually connected via the network 300. A method for connection between respective apparatuses is not limited to a specific method. For example, the apparatuses may be connected by a wired cable.
The image capturing apparatus 100 transmits image data based on an image capturing result or various information of the image capturing apparatus 100 as a signal to the information processing apparatus 200 via the network 300. It is noted that herein for explanations, the information processing apparatus 200 is connected to the image capturing apparatus 100, but there is no limit on the number of image capturing apparatuses, it is sufficient when the number of image capturing apparatuses is one or more.
As the signal to be input to the information processing apparatus 200, not only a case where the image capturing apparatus 100 is directly connected to the information processing apparatus 200 but also a configuration in which the signal is input via another processing apparatus represented by a switcher or an effector can be adopted.
In addition, the information processing apparatus 200 can also enable recall of a reset function, deletion, and a detail setting operation of an automatic loop function.
In addition, the explanations are provided where the information processing apparatus 200 is integrated with hardware having an operation unit which enables operations on a camera or an output image, such as a camera controller, but the information processing apparatus 200 may be independent as a separate unit.
In a case where the information processing apparatus 200 is independent from the operation unit, by using a control apparatus such as a camera controller as the operation unit, settings on positions of pan, tilt, and zoom (PTZ) drive units of the image capturing apparatus, other image qualities, and the like can be performed and registered as preset settings. In this case, a controller serving as the operation unit is connected to the image capturing apparatus 100 via the network 300 or is connected to the image capturing apparatus 100 by using serial connection or the like.
The network 300 is a network which connects the image capturing apparatus 100 and the information processing apparatus 200. The network 300 is realized, for example, by a plurality of routers, switches, cables, and the like in compliance with a communication standard such as ETHERNET (registered trademark). It is noted that the network 300 may be realized by the Internet, a wired local area network (LAN), a wireless LAN, a wide area network (WAN), or the like.

Hardware configuration of image capturing apparatus

Next, the image capturing apparatus 100 according to the present embodiment will be described with reference to Fig. 2. Fig. 2 illustrates an example of a hardware configuration of the image capturing apparatus 100. The image capturing apparatus 100 includes an image capturing unit 101, a lens drive unit 102, a pan drive unit 103, a tilt drive unit 104, an image processing unit 105, a zoom control unit 106, and a pan and tilt control unit 107. The image capturing apparatus 100 further includes a system control unit 108, a storage unit 109, and a communication unit 110. Each of the components is connected so as to be mutually communicable via an internal bus which is not illustrated in the drawing.
Programs for implementing functions according to the present embodiment and data to be used when the programs are executed are stored in a read only memory (ROM) included in the storage unit 109, for example. Furthermore, under control by the system control unit 108, for example, these programs and data are loaded into a random access memory (RAM) included in the storage unit 109 and executed by the system control unit 108.
The image capturing unit 101 performs image capturing of an object and conversion into an electric signal. Specifically, the image capturing unit 101 includes an image capturing optical system and an image sensor. The image capturing optical system is a lens that focuses light from a subject onto an image sensing surface of an image capturing element and is constituted by, for example, a zoom lens, a focus lens, an image stabilizer lens, and the like. The image sensor captures an image of a subject which is incident via the image capturing optical system and converts the image into an electric signal. The image sensor is realized, for example, by a charge coupled device (CCD) sensor or a complementary metal oxide semiconductor (CMOS) sensor. A part of the image capturing optical system also functions as the lens drive unit 102 which will be described below. In addition, an exposure can be adjusted by changing a shutter speed or a gain of the image sensor.

The lens drive unit 102 is constituted by a drive system including a focus lens and a zoom lens, and its operation is controlled by the zoom control unit 106. In addition, a zoom lens and a focus lens are driven based on control commands from the system control unit 108 described below which is acquired via the zoom control unit 106. By driving the zoom lens and the focus lens described above, it is possible to change a zoom value and a focus value. Furthermore, the lens drive unit 102 outputs information of the zoom value and the focus value to the zoom control unit 106. The zoom value and the focus value to be output may be output as values of a zoom magnification, a focal length, or the like or focal positions.

The pan drive unit 103 is constituted by a mechanical drive system configured to perform a pan operation and a motor which serves as a drive source, and its operation is controlled by the pan and tilt control unit 107. The pan drive unit 103 is constituted, for example, by an actuator such as a stepping motor and an encoder configured to detect a pan angle. The pan drive unit 103 can transmit the detected pan angle (pan value) to the pan and tilt control unit 107.

The tilt drive unit 104 is constituted by a mechanical drive system configured to perform a tilt operation and a motor which serves as a drive source, and its operation is controlled by the pan and tilt control unit 107. The tilt drive unit 104 is constituted, for example, by an actuator such as a stepping motor and an encoder configured to detect a tilt angle. The tilt drive unit 104 can transmit the detected tilt angle (tilt value) to the pan and tilt control unit 107.

The image processing unit 105 performs predetermined image processing and encoding processing on signals captured and photoelectrically converted in the image capturing unit 101 to generate image data. It is noted that the number of image data to be generated is not necessarily one, and it may be possible to generate a plurality of pieces of image data with different resolutions and video qualities at the same time. In addition, the image processing unit 105 outputs the generated image data to the system control unit 108.

The zoom control unit 106 controls the lens drive unit 102 based on the control command acquired from the system control unit 108.

The pan and tilt control unit 107 controls the pan drive unit 103 and the tilt drive unit 104 based on the control command acquired from the system control unit 108.

The system control unit 108 is an example of a processor configured to control the entire image capturing apparatus 100, which is represented by a central processing unit (CPU) in an overall manner. In the present embodiment, the system control unit 108 analyzes a control command acquired via the communication unit 110 and performs processing according to the control command. Specifically, a control command for image quality adjustment is output to the image processing unit 105, a control command for zoom and focus control is output to the zoom control unit 106, and a control command for pan and tilt operations is output to the pan and tilt control unit 107. The system control unit 108 also performs control such that the control commands output to the zoom control unit 106 and the pan and tilt control unit 107 are stored in the storage unit 109. At this time, the system control unit 108 performs the control to store the output control commands and time information in the storage unit 109 in association with each other, but the configuration is not limited to this. For example, the system control unit 108 may store only the control commands.

Furthermore, the system control unit 108 acquires the image data generated by the image processing unit 105 and transmits the image data to the communication unit 110. In addition, the system control unit 108 records the control commands acquired when trace information (transition information) is created and edited which will be described below and time information (target arrival time) in the storage unit 109 in association with each other. In the present embodiment, the system control unit 108 stores the trace information, but the configuration is not limited to this. For example, the system control unit 204 which will be described below may store the control commands that are input to the input unit 202 when the trace information is created and edited and the time information in the storage unit 203 in association with each other. Herein, the time information included in the trace information is information indicating a temporal transition of a position of each trajectory point. In addition, the target arrival time refers to an elapsed time from trace playback to arrival at designated pan and tilt angles.

The storage unit 109 saves image data, various setting commands, and the like. The storage unit 109 stores various computer programs and various data as information used for the system control unit 108 to perform processing. In other words, the storage unit 109 is a main storage memory and is used as a work area or a temporary storage area for deploying various programs. The storage unit 109 may also be used as a storage area for temporarily holding various data such as image data according to an image capturing result.

Furthermore, the storage unit 109 is a non-volatile storage unit represented by a flash memory, a hard disc drive (HDD), a solid state drive (SSD), or a SD card. The storage unit 109 is also used as a persistent storage area which stores programs for the system control unit 108 to control the image capturing apparatus 100 and the like such as an operating system (OS), various programs, and various data.

In addition to the above, the storage unit 109 is also used as a short-term storage area which stores various setting parameters and the like.

The communication unit 110 transmits, to the information processing apparatus 200, the image data transmitted from the system control unit 108. In addition, the communication unit 110 receives various setting commands and control commands transmitted from the information processing apparatus 200 and outputs those commands to the system control unit 108. In addition, the communication unit 110 transmits, to the information processing apparatus 200, responses of the image capturing apparatus 100 to various commands acquired from the information processing apparatus 200.

In other words, the communication unit 110 is an interface (I/F) configured to connect the above-described network 300 and the above-described component and plays a role for communication with an external apparatus such as the information processing apparatus 200 via a communication medium such as Ethernet (registered trademark). Herein, the control of the image capturing apparatus 100 may be performed via the communication unit 110 or may be performed via another I/F such as a serial communication I/F (not illustrated).

It is noted that in the image capturing apparatus 100 of the present embodiment, a case will be exemplified in which the single system control unit 108 executes each processing illustrated in a flowchart described below by using the single storage unit 109. However, the image capturing apparatus 100 does not necessarily adopt this configuration. For example, a plurality of system control units and storage units may execute each processing illustrated in the flowchart described below in collaboration. In addition, at least some of each processing illustrated in the flowchart may be executed by dedicated-use hardware. Examples of the dedicated-use hardware include, for example, an application specific integrated circuit (ASIC), a field-programmable gate array (FPGA), and the like. In addition, the processor is not limited to a CPU. The processor may be, for example, a graphics processing unit (GPU).

Hardware configuration of information processing apparatus

Next, an example of a hardware configuration of the information processing apparatus 200 will be described in detail with reference to Fig. 2.

The information processing apparatus 200 includes a display unit 201, an input unit 202, a storage unit 203, a system control unit 204, and a communication unit 205. Each of the components is connected so as to be mutually communicable via an internal bus which is not illustrated in the drawing. Programs for implementing the functions according to the present embodiment and data to be used when the programs are executed are stored, for example, in a ROM included in the storage unit 203. Furthermore, these programs and data are taken into a RAM included, for example, in the storage unit 203 under control by the system control unit 204 and executed by the system control unit 204.

For the information processing apparatus 200, a general-use computer such as a personal computer (hereinafter, referred to as a PC) or a mobile terminal such as a tablet is used. That is, the explanation will be provided where the information processing apparatus 200 is a general client terminal such as a PC or a tablet which includes a display unit such as a display and an operation unit, but the configuration is not limited to this. A terminal including a display unit such as a display and an operation unit of the information processing apparatus 200 may be separate units.

For the display unit 201, a display apparatus such as a liquid crystal projector or a liquid crystal monitor is used. The display unit 201 displays the image acquired from the image capturing apparatus 100 or displays a graphic user interface (hereinafter, referred to as a GUI) configured to perform control of the image capturing apparatus 100. In addition, the display unit 201 displays a GUI for creating trace information which will be described below and editing and playing back the trace information.

The input unit 202 is a user interface represented by a pointing device such as a keyboard, a mouse, and a touch panel and enables exchange of information between a user and the information processing apparatus 200. As an example, for the input unit 202, examples include an output device such as a display and an input device such as a keyboard, a mouse, and a touch panel. The input unit 202 accepts input information from the user and transmits the information to the system control unit 204. In the present embodiment, the explanation is provided where the user operates the GUI displayed on the display unit 201 via the input unit 202. In addition, the user can input control information for changing an image capturing range of the image capturing apparatus 100 from the input unit 202. A control method at this time is not limited to a specific method. For example, an input apparatus such as a joy stick may be connected to the input unit 202. When the input unit 202 acquires the control information for changing the image capturing range of the image capturing apparatus 100, the input unit 202 outputs the control information to the system control unit 204.

The storage unit 203 records camera information and the like in an internal storage and an external storage. The storage unit 203 stores various computer programs and various data as information used for the system control unit 204 to perform processing. In other words, the storage unit 203 is a main memory and is used as a work area or a temporary storage area for deploying various programs. In addition, the storage unit 203 may also be used as a storage area for temporarily holding various data such as image data acquired from the image capturing apparatus.

Furthermore, the storage unit 203 is a non-volatile storage unit represented by a flash memory, a HDD, a solid state drive (SSD), or a SD card. The storage unit 203 is also used as a persistent storage area which stores programs for the system control unit 204 to control the information processing apparatus 200 and the like such as an operating system (OS), various programs, and various data. In addition to the above, the storage unit 203 is also used as a short-term storage area which stores various setting parameters and the like.

The system control unit 204 is an example of a processor configured to control the entire information processing apparatus 200, which is represented by a central processing unit (CPU) in an overall manner. In the present embodiment, the system control unit 204 controls the information processing apparatus 200 according to the GUI operation by the user acquired via the input unit 202. Furthermore, in a case where the GUI operation by the user is an operation related to the image capturing apparatus 100, the system control unit 204 generates various setting commands and control commands and transmits those commands to the image capturing apparatus 100 via the communication unit 205. The system control unit 204 also receives, via the communication unit 205, responses of the image capturing apparatus 100 to the various transmitted setting commands and control commands. In addition, the system control unit 204 executes control of the information processing apparatus 200 such that the image data received from the image capturing apparatus 100 is displayed on the display unit 201 via the communication unit 205.

The communication unit 205 transmits, to the image capturing apparatus 100, the setting commands and control commands transmitted from the system control unit 204. The communication unit 205 also transmits, to the system control unit 204, the image data transmitted from the image capturing apparatus 100 and the responses of the image capturing apparatus 100 to the commands transmitted from the information processing apparatus 200. In other words, the communication unit 205 is an I/F configured to connect the above-described network 300 and the above-described component and plays a role for communication with an external apparatus such as the image capturing apparatus 100 via a communication medium such as Ethernet (registered trademark).

It is noted that in the information processing apparatus 200 of the present embodiment, a case is exemplified where the single system control unit 204 executes each processing illustrated in a flowchart described below by using the single storage unit 203. However, the information processing apparatus 200 does not necessarily adopt this configuration. For example, a plurality of system control units and storage units may execute each processing illustrated in the flowchart described below in collaboration. In addition, at least some of each processing illustrated in the flowchart may be executed by dedicated-use hardware. Examples of the dedicated-use hardware include, for example, an application specific integrated circuit (ASIC), a field-programmable gate array (FPGA), and the like. In addition, the processor is not limited to a CPU. The processor may be, for example, a graphics processing unit (GPU).

In this manner, the information processing apparatus 200 can control the image capturing apparatus 100 by outputting the control command to the image capturing apparatus 100 via the network 300.

Functional block diagram of information processing apparatus

Next, a function of the system control unit 204 in the information processing apparatus 200 will be described with reference to Fig. 3. Fig. 3 illustrates an example of a configuration of a function included in the system control unit 204 provided in the information processing apparatus 200. As illustrated in Fig. 3, the system control unit 204 is constituted by a camera information acquisition unit 220, an image acquisition unit 221, a PTZ control unit 222, a user request acquisition unit 223 (correction unit), a trace editing unit 224 (update unit), a trace playback unit 225, a trajectory line calculation unit 226, and a trace information rendering unit 227 (display control unit). Each of functions illustrated in Fig. 3 is realized by reading out programs stored in the system control unit 204 to the storage unit 203 and executing the programs. In other words, the system control unit 204 performs image processing and data calculation by using these programs. In addition, the system control unit 204 executes programs saved in the storage unit 203 and manages tasks such as read, processing, and output of image data to realize an operation of the entire system.

The camera information acquisition unit 220 transmits an information acquisition command to the image capturing apparatus 100 via the communication unit 205. In addition, the camera information acquisition unit 220 acquires information of the image capturing apparatus 100 from the image capturing apparatus 100 and outputs the information to the storage unit 203. Herein, information that can be acquired by the camera information acquisition unit 220 includes zoom values, pan values, and tilt values (current values) of the lens drive unit 102, the pan drive unit 103, and the tilt drive unit 104. The camera information acquisition unit 220 can further acquire information such as movable ranges of the lens drive unit 102, the pan drive unit 103, and the tilt drive unit 104. Furthermore, in a case where the information processing apparatus 200 plays back the trace information, the camera information acquisition unit 220 outputs the zoom values, pan values, and tilt values (current values) of the lens drive unit 102, the pan drive unit 103, and the tilt drive unit 104 to the trace information rendering unit 227.

The image acquisition unit 221 transmits an image acquisition command to the image capturing apparatus 100 via the communication unit 205 and acquires a captured image from the image capturing apparatus 100 to output the captured image to the display unit 201.

The PTZ control unit 222 generates a PTZ control command via the communication unit 205 based on the control information input from the trace editing unit 224 or the trace playback unit 225 or the control information input via the input unit 202 and transmits a PTZ control command to the image capturing apparatus 100. Herein, the PTZ control command refers to a control command for controlling the lens drive unit 102, the pan drive unit 103, and the tilt drive unit 104 of the image capturing apparatus 100. The image capturing apparatus 100 controls the lens drive unit 102, the pan drive unit 103, and the tilt drive unit 104 of the image capturing apparatus 100 based on the control command transmitted from the PTZ control unit 222. Herein, a configuration may be adopted where in a case where the trace information is played back, starting and stopping commands of trace control are transmitted to the image capturing apparatus 100, and control of the lens drive unit 102, the pan drive unit 103, and the tilt drive unit 104 during a trace operation is performed inside the image capturing apparatus 100. In the above-described case, the trace information is saved in the storage unit 109 of the image capturing apparatus 100.

The user request acquisition unit 223 accepts a user request output from the input unit 202. The user request includes a "trace recording request", a "trace editing request", and a "trace playback request". The "trace recording request" further includes "recording start" and "recording stop". The "trace editing request" includes any of "point addition", "point editing", and "point deletion". The "trace playback request" includes any of request information of "playback start" and "playback stop". In a case where the user request is the "trace recording request" and the "trace editing request", the request information is output to the trace editing unit 224. In a case where the user request is the "trace playback request", the request information is output to the trace playback unit 225.

In a case where the request information input from the user request acquisition unit 223 is the trace recording request and includes recording start, the trace editing unit 224 records the trace information. In a case where the request information input from the user request acquisition unit 223 is the trace recording request and includes recording stop, the trace editing unit 224 stops recording of the trace information. Similarly, in a case where the request information input from the user request acquisition unit 223 is the trace editing request, the trace editing unit 224 reads out the trace information stored in the storage unit 203 to edit the trace information. In a case where the request information is "point addition", the trace editing unit 224 adds a new trajectory point to the trace information based on a parameter corresponding to a position to which a graph operation is applied.

Herein, a trajectory point in the present embodiment refers to a point having pan and tilt angles (target position) to be reached which is designated by the user in the trace information. Furthermore, the trajectory point is a point having information (identification information) on the elapsed time from start of tracing (time period from trace playback to arrival at the pan and tilt angles). Furthermore, it is assumed that the trajectory point has a trajectory line connecting a trajectory point and a next trajectory point and a parameter for calculating a control point constituting the trajectory line. That is, the control point is a point constituting a trajectory line connecting a trajectory point and a next trajectory point. The control point is a parameter including information related to the pan and tilt angles and the elapsed time.

In other words, the trajectory point is a parameter set by the user, and the control point is a parameter calculated based on the trajectory point set by the user. With regard to the control point, a decision is made by performing piecewise cubic Hermite interpolation with two or three control points. It is noted that for an interpolation method used when the control point is decided, other interpolation methods such as cubic spline interpolation and Akima interpolation may be used as long as necessary information for smoothly connecting preceding and succeeding trajectory points and the trajectory point can be acquired. The control point is decided based on the thus input trajectory point. A calculation method for the control point and the trajectory line will be described below.

In the present embodiment, the explanation will be provided where the trajectory point is a point having pan and tilt angles, but the configuration is not limited to this. For example, the trajectory point may have a parameter related to a zoom position. In the above-described case, information related to the zoom position included in the trajectory point refers to a zoom position to be reached which is designated by the user.

In a case where an input from the request information input from the user request acquisition unit 223 is "point editing", the trace editing unit 224 changes the PT(Z) positions and the elapsed time in association with the trajectory point to be edited or changes the parameter for calculating the trajectory line to be edited. In a case where the request information input from the user request acquisition unit 223 is "point deletion", the trace editing unit 224 deletes, from the trace information, the trajectory point that is currently edited.

The trace playback unit 225 reads out the trace information stored in the storage unit 203 from the request information input from the user request acquisition unit 223 to execute trace playback processing. In a case where the request information is "playback start", the control information is output to the PTZ control unit 222, and the time information is output to the trace information rendering unit 227. In a case where the request information is "playback stop", information output to the PTZ control unit 222 and the trace information rendering unit 227 is stopped, and playback is aborted.

The trajectory line calculation unit 226 calculates a connecting trajectory line based on information of each trajectory point of the trace information described below. According to the present embodiment, each of a time-pan trajectory line representing a time and pan relationship and a time-tilt trajectory line representing a time and tilt relationship is calculated by using a cubic Bezier curve. It is noted that according to the present embodiment, the trajectory line is calculated by using the cubic Bezier curve, but other trajectories such as a cubic spline curve and a Lagrange interpolating polynomial may be used as long as a trajectory representing a transition of a time and pan and tilt can be represented.

The trace information rendering unit 227 creates a content to be displayed on the display unit 201 based on the time information and the control information which are input from the camera information acquisition unit 220 and the trace playback unit 225. The content to be displayed will be described below.

Creation and editing method of trace information

Next, a method of creating and editing the trace information in the first embodiment will be described with reference to Fig. 4. A GUI 400 in Fig. 4 is a setting screen for creating, editing, and playing back trace information to be displayed on the display unit 201 of the information processing apparatus 200.

The GUI 400 in Fig. 4 includes a trace ID 401 serving as information for identifying the trace information and a record start button 402 for instructing start of recording (creation) of the trace information. The GUI 400 further includes a record stop button 403 for instructing stop of recording of the trace information and a playback button 404 for playing back the trace information and stopping the playback. The GUI 400 also includes a point addition button 405, a point editing button 406, and a point deletion button 407 for switching an editing state of the trace information when the trace information is edited. The GUI 400 further includes a pan-tilt graph 410 (first information display area) as a two-dimensional graph representing a relationship between a pan value and a tilt value. In addition, a time-pan graph 420 (second information display area) as a two-dimensional graph representing a relationship between a pan value and a time, and a time-tilt graph 430 (second information display area) as a two-dimensional graph representing a relationship between a tilt value and a time.

Herein, the time represented by the horizontal axis in the time-pan graph 420 and the time-tilt graph 430 refers to an elapsed time from a point in time when playback of the trace information is started. On the GUI 400 of Fig. 4, a graph based on the created trace information is displayed. In the present embodiment, the pan-tilt graph 410, the time-pan graph 420, and the time-tilt graph 430 are displayed, but the configuration is not limited to this. For example, a graph related to a zoom value (time-zoom graph) may be displayed. In addition, a three-dimensional graph representing a pan value, a tilt value, and a zoom value may be displayed.

In this manner, the user can create the trace information and edit the created trace information by operating the displayed graph.

The trace ID 401 is an identifier (ID) that uniquely identifies a series of created trace information (hereinafter, referred to as a trace ID). In the example of Fig. 4, when the trace ID 401 is clicked by the user, the trace ID corresponding to each of the registered trace information is displayed in a list. In addition, trace ID addition (not illustrated) can be selected for the trace ID 401. When this trace ID addition is selected, a new trace ID is issued and displayed in a selected state in the trace ID 401.

It is noted that, for example, 10 trace IDs may be listed up in the trace ID 401 in a fixed format.

The record start button 402 is a button for creating trace information. When the user presses the record start button 402, creation of the trace information starts.

The record stop button 403 is a button for stopping recording of the trace information that is being created.

When the user presses the recording stop button, creation of the trace information stops, and the storage unit 203 records the trace information from the start and the stop of the creation of the trace information in association with the trace ID selected in the trace ID 401. In the present embodiment, the record start button 402 and the record stop button 403 are used when the trace information is created by controlling the image capturing apparatus described below, but the configuration is not limited to this. The record start button 402 and the record stop button 403 may be used for the creation of the trace information by a graph operation described below.

The playback button 404 is a button for playing back the created trace information. When the user presses the playback button 404, the trace information linked to the selected trace ID 401 is read out from the storage unit 203, and the following processing is executed. That is, the system control unit 204 refers to the trace information and controls the image capturing apparatus 100 so as to trace a transition of a parameter. It is noted that processing of referring to the trace information and controlling the image capturing apparatus 100 so as to trace the transition of the parameter by the user operation in the above-described manner is called trace playback. In addition, when the user presses the playback button 404 again in a state in which the playback button 404 is pressed, the trace playback for the image capturing apparatus 100 stops.

The point addition button 405 is a button for adding a trajectory point. When the user presses the point addition button 405, the "trace editing request" including "point addition" is output to the user request acquisition unit 223 via the input unit 202. When any of the graphs described below is operated in a state in which the point addition button 405 is pressed, the trajectory point is added to a corresponding position. In this manner, the trace editing unit 224 can add a new trajectory point to the trace information with the trace ID selected in the trace ID 401 based on the parameter corresponding to the position to which the graph operation is applied.

The point editing button 406 is a button for editing the trace information. When the user presses the point editing button 406, the "trace editing request" including "point editing" is output to the user request acquisition unit 223 via the input unit 202. When any of the graphs described below is operated and the trajectory line, the trajectory point, or the control point is dragged in a state in which the point editing button 406 is pressed, it is possible to change the target position of the corresponding point, the elapsed time, or the position of the control point.

The point deletion button 407 is a button for deleting the control point. When the user presses the point deletion button 407, the "trace editing request" including "point deletion" is output to the user request acquisition unit 223 via the input unit 202. When a point, rendering of which is performed in any of the graphs described below, is selected in a state in which the point deletion button 407 is pressed, the trace information of the corresponding point can be deleted.

By pressing each button of the point addition button 405, the point editing button 406, and the point deletion button 407 in this manner, operable states and non-operable states for "point addition", "point editing", and "point deletion" are respectively switched. Each button has two states of a pressed state and a non-pressed state.

The pan-tilt graph 410 is a two-dimensional graph representing a pan and tilt relationship in the trace information illustrated in Fig. 4. In a state in which the point addition button 405 is pressed, by clicking a mouse button at any position on the pan-tilt graph 410, for example, the user can add a trajectory point to the position. In a state in which the point editing button 406 is pressed, the user operates any of the trajectory points or control points on the pan-tilt graph 410. According to the operation, the target pan and tilt positions of the trajectory point or the position of the control point can be changed. For example, a configuration may be adopted in which the trajectory point can be selected by clicking the mouse button, and the trajectory point can be operated by dragging the trajectory point or the control point.

At this time, to make it clear which trajectory point that is being selected, a configuration may be adopted in which a color, a size, a shape, or the like of only the trajectory point that is being selected is changed to be highlighted for display. In a state in which the point deletion button 407 is pressed, the user can delete any of the trajectory points on the pan-tilt graph 410, for example, by clicking the mouse button to select the trajectory point.

In the present embodiment, for example, in a case where the elapsed time of the first trajectory point added on the pan-tilt graph 410 is zero, when the next trajectory point is added, a time obtained by adding a predetermined time to the elapsed time of the immediately preceding trajectory point is set as the elapsed time in the added trajectory point information.

Herein, the elapsed time obtained by adding the predetermined time to the elapsed time of the immediately preceding point is set when the user adds the trajectory point, but the configuration is not limited to this. For example, a time period from a point in time since the point addition button 405 is pressed may be set.

The time-pan graph 420 is a two-dimensional graph representing a time and pan value relationship in the trace information illustrated in Fig. 4. In a state in which the point addition button 405 is pressed, by clicking the mouse button at any position on the time-pan graph 420, for example, the user can add a trajectory point to the position. At this time, in the trajectory point, the tilt value is recorded as zero, but the configuration is not limited to this. For example, the same tilt value as the tilt value of the trajectory point closest to the added trajectory point may be input, or the user may input the tilt value when the trajectory point is added. In a state in which the point editing button 406 is pressed, the user selects any of the trajectory points on the time-pan graph 420, for example, by clicking the mouse button. By dragging the selected trajectory point or control point, the target pan position or the elapsed time of the trajectory point or the position of the control point can be changed. In a state in which the point deletion button 407 is pressed, the user can delete any of the trajectory points on the time-pan graph 420, for example, by clicking the mouse button to select the trajectory point.

The time-tilt graph 430 is a two-dimensional graph representing a time and tilt relationship in the trace information illustrated in Fig. 4. In a state in which the point addition button 405 is pressed, by clicking the mouse button at any position on the time-tilt graph 430, for example, the user can add a trajectory point to the position. At this time, in the trajectory point, the pan value is recorded as zero, but the configuration is not limited to this. For example, the pan value that is the same as the pan value of the trajectory point closest to the added trajectory point may be input, or the user may input the pan value when the trajectory point is added. In a state in which the point editing button 406 is pressed, the user selects any of the trajectory points on the time-tilt graph 430, for example, by clicking the mouse button. By dragging the selected trajectory point or control point, the target tilt position or the elapsed time of the trajectory point or the position of the control point can be changed. In a state in which the point deletion button 407 is pressed, the user can delete any of the trajectory points on the time-tilt graph 430, for example, by clicking the mouse button to select the trajectory point.

In this manner, when a graph area is operated and a trajectory point is added at the beginning, information in which the pan value, the tilt value, and the elapsed time corresponding to the image capturing apparatus 100 are associated with zero is recorded as the trajectory point information based on the trajectory point. With such a configuration, by operating and editing a single two-dimensional graph, two parameters that can be designated on the two-dimensional graph and a parameter that is not to be designated on the two-dimensional graph can be set as the trajectory point information.

In the present embodiment, when a trajectory point is created on the pan-tilt graph 410, a position of the created trajectory point and a pan value and a tilt value at the corresponding position on the pan-tilt graph 410 are recorded as the trajectory point information. Furthermore, a previously set elapsed time is recorded as the trajectory point information.

Similarly, when a trajectory point is created on the time-pan graph 420, a position of the created trajectory point and a pan value and an elapsed time at the corresponding position on the time-pan graph 420 are recorded as the trajectory point information. Furthermore, a previously set tilt value is recorded as the trajectory point information. When a trajectory point is created on the time-tilt graph 430, a position of the created trajectory point and a tilt value and an elapsed time at the corresponding position on the time-tilt graph 430 are recorded as the trajectory point information. Furthermore, a previously set pan value is recorded as the trajectory point information.

It is noted that herein, the trace information may be recorded by controlling the image capturing apparatus 100, or the trace information may be created when the user adds a trajectory point to the pan-tilt graph 410 that is the two-dimensional graph representing the relationship of the time and the pan and tilt values in the trace.

As described above, the user can record the trace information in association with the single trace ID by adding, editing, or deleting the trajectory point, but the configuration is not limited to this. For example, an upper limit of a time period may be previously set. In this case, when an elapsed time from a point in time when the trajectory point is added for the first time has reached a set time period, the storage unit 203 may stop the trace recording and store the consecutively recorded trace information in a trace information table. In addition, when a previously set time period from a point in time when the trajectory point is added, edited, or deleted has passed, the storage unit 203 may stop the trace recording and store the consecutively recorded trace information in the trace information table. The time period at this time may be set and changed by the user or may be decided by an initial setting or the like.

It is noted that the operation of point addition/point editing/point deletion described above is not limited to the graph operation and may be realized, for example, by a numerical value input.

Furthermore, similar control can be performed also in a case where the already created trace information is edited. In the above-described case, when a trace ID that the user desires to edit is designated in the trace ID 401, the trace information stored in the storage unit 203 is read out, and rendering is performed by the trace information rendering unit 227. The user can edit the trace information by an operation similar to the operation when the trace information is created. A specific control flow will be described below.

Next, a method of creating trace information by controlling the image capturing apparatus 100 will be described.

When the record start button 402 is pressed by the user to start creation of the trace information, the user performs the operation on the image capturing apparatus 100 to create the trace information. When the record stop button 403 is pressed by the user in a case where the creation of the trace information is started, the creation of the trace information is stopped. Furthermore, the storage unit 203 records the trace information from the start to the stop of the creation of the trace information in association with the trace ID selected in the trace ID 401.

First, an operation of recording the trace information by controlling the image capturing apparatus 100 will be described. Here, when the user inputs control information for controlling the image capturing apparatus 100 by the input unit 202, a control command for the image capturing apparatus is consecutively generated according to the user operation, and when the control command is transmitted to the image capturing apparatus 100, it is assumed that the control of the image capturing apparatus 100 is realized. For example, in a case where the joy stick is connected to the input unit 202, a user operation of tilting the joy stick in a left and right direction is performed, the PTZ control unit 222 generates a control command according to the input user operation and transmits the control command to the image capturing apparatus 100.

In a case where a user operation of tilting the joy stick in an up and down direction is performed, the PTZ control unit 222 generates a control command for changing the tilt value and transmits the control command to the image capturing apparatus 100. In the recording of the trace information, the storage unit 203 records the time information corresponding to the transition of the parameter of the image capturing apparatus 100 which is consecutively changed by the user operation (temporal transitions of pan and tilt angles) as the trace information linked to the currently selected trace ID. In the present embodiment, in a case where the trace information is recorded by controlling the image capturing apparatus 100 of the user, the explanation is provided where the transition of the parameter in a predetermined cycle is recorded. In the above-described case, the pan value, the tilt value, and the zoom value in the predetermined cycle are recorded as the trajectory points in association with each other. In other words, for example, the trace information is recorded in which the pan value, the tilt value, and the zoom value every two seconds after the record start button 402 is pressed are set as the trajectory points.

The information processing apparatus 200 records the time information corresponding to the transitions of the parameters of the trajectory points which are consecutively added (temporal transitions of pan and tilt angles) as the trace information linked to the currently selected trace ID until the record stop button 403 is pressed.

In a state in which the record start button 402 is pressed by the user as described above, when an operation is performed on the image capturing apparatus 100, creation of the trace information is realized. In other words, the information processing apparatus 200 records the time information corresponding to the transition of the parameter of the image capturing apparatus 100 which is consecutively changed as the trace information linked to the currently selected trace ID until the record stop button 403 is pressed.

In the present embodiment, the explanation is provided where two methods are included with which the trace information is created by controlling the image capturing apparatus 100 and the trace information is created by using the point addition button 405, the point editing button 406, and the point deletion button 407, but the configuration is not limited to this. A GUI for selecting which one of the methods is used to record the trace information may be displayed on the display unit 201, only one of the methods may be included.

Playback of trace information

In a case where the playback button 404 is pressed by the user, the system control unit 204 reads out the trace information linked to the selected trace ID 401 from the storage unit 203 and executes the following processing. When the playback button 404 is pressed, a trace playback request of "playback start" is transmitted to the user request acquisition unit 223, and the playback button 404 turns into a button for transmitting a trace request to stop the playback. In other words, when the playback button 404 is pressed during playback of the trace information, the "playback stop" trace request is transmitted to the user request acquisition unit 223. In addition, when the playback of the trace information ends, the state transitions to a stopped state, and the playback button 404 turns into the playback button for transmitting the playback start trace request.

Here, a trace information table is described with reference to Fig. 5. The trace information table 500 illustrated in Fig. 5 represents an example of a table for storing trace information. In the trace information table 500, a trace ID 501 and the trace information obtained by the trace recording are stored in association with each other.

The trace ID 501 is an ID for uniquely identifying the trace information and is the same as the ID displayed in the trace ID 401. The trace information is recording of the operation on the image capturing apparatus 100 by the user during a predetermined period or the trajectory point information set by the user, and a reference is made to the trace information at the time of trace playback. A trajectory point number 502 represents a number allocated to the trajectory point added to the trace information. An elapsed time 503 represents an elapsed time at a point in time of arrival at the trajectory point from start of tracing. Pan information, tilt information, and zoom information for each trajectory point are respectively described in pan information 504, tilt information 505, and zoom information 506. Target positions of the trajectory point are described in pan angle information 507, tilt angle information 509, and zoom position information 511. Parameters for calculating the trajectory line (or the control point constituting the trajectory line) are described in pan control point information 508, tilt control point information 510, and zoom control point information 512.

Specifically, the trajectory line calculation unit 226 calculates a trajectory line connecting trajectory points based on information of each trajectory point of the trace information described below. According to the present embodiment, each of a time-pan trajectory line representing a time and pan relationship and a time-tilt trajectory line representing a time and tilt relationship is calculated using a cubic Bezier curve. It is noted that according to the present embodiment, the trajectory line is calculated using a cubic Bezier curve, but other trajectories may be used as long as a trajectory representing transitions of the time, pan, and tilt can be represented, such as a cubic spline curve and a Lagrange interpolating polynomial.

A calculation equation of the cubic Bezier curve is expressed as follows, using a start point P0, an end point P1, a control point B0, a control point B1, and a parameter t.

$$C(t) = (1-t)^3 P_0 + 3(1-t)^2 t B_0 + 3(1-t) t^2 B_1 + t^3 P_1 \quad (0 \leq t \leq 1) \qquad \ldots (3)$$

Herein, coordinates of the start point and the end point are respectively the elapsed time and the target position of the trajectory point, and coordinates of the control point are values described in the pan control point information 508, the tilt control point information 510, and the zoom control point information 512 in the trace information of Fig. 5. For example, in the trace information of Fig. 6, in a case where a time-pan trajectory line from a trajectory point with a trajectory point number 1 to a trajectory point with a trajectory point number 2 is calculated, the start point P0 (0.0, -0.83) and the end point P1 (3.0, -1.3) are set. In addition, the control point B0 (1.0, -0.8) and the control point B1 (2.0, -4.3) are set. A pan-tilt trajectory line representing a pan and tilt relationship is calculated based on the time-pan trajectory line and the time-tilt trajectory line.

A method of calculating the trajectory line will be described below. It is noted that according to the present embodiment, the trace information is recorded for each row while being linked to the time information. In this example, when the user presses the trace playback button 404 of Fig. 4, as illustrated in the rendering on the pan-tilt graph 410 of Fig. 4, the pan is in an almost motionless state and the tilt is driven in a downward direction from the trajectory point number 1 to the trajectory point number 2 in Fig. 5. Pan and tilt are driven counterclockwise in a circular manner from a trajectory point number 3 to a trajectory point number 6. Zoom moves to a TELE side from the trajectory point number 1 to the trajectory point number 3 and moves to return to a WIDE side to the trajectory point number 6.

It is noted that not only the parameter related to the pan value and the parameter related to the tilt value but also other parameters may be recorded in the trace information according to the present embodiment. For example, a parameter of white balance, a parameter of an exposure, and a parameter of an image quality may be used. Similarly, the zoom value parameter does not necessarily need to be recorded in the present embodiment. It is sufficient when only the parameters of the pan value and the tilt value are recorded as the trace information. In this manner, by recording only the parameters of the pan value and the tilt value as the trace information, the present embodiment can be applied to a pan/tilt head connected to the image capturing apparatus 100.

Control flow when the trace information is edited

Here, a processing flow of the system control unit 204 in the first embodiment is described with reference to Fig. 6, Fig. 7, Fig. 8, and Fig. 9. Fig. 6 is a flowchart illustrating a flow of creating and editing a trace in any of the graphs of the pan-tilt graph 410, the time-pan graph 420, and the time-tilt graph 430 displayed in the display unit 201. This flowchart starts when the user operates the GUI displayed on the display unit 201 via the input unit 202, and the flowchart ends when the rendering of trace creation and editing instruction contents by the user is carried out on the GUI. Fig. 7 and Fig. 8 illustrate display examples of the GUI on the display unit 201 when the present processing is performed. Fig. 7 is a setting screen for creating, editing, and playing back the trace information to be displayed on the display unit 201 of the information processing apparatus 200. The GUI 400 includes the trace ID 401 indicating identification information of the trace information to be recorded. The GUI 400 further includes the record start button 402 for instructing start of the trace recording, the record stop button 403 for instructing stop of the trace recording, and the playback button 404 for instructing playback of the trace recording and stopping the playback. In addition, the GUI 400 includes the point addition button 405, the point editing button 406, and the point deletion button 407 for switching a trace editing state. Furthermore, the GUI 400 includes the pan-tilt graph 410 that is the two-dimensional graph representing the relationship between the pan value and the tilt value, the time-pan graph 420 that is the two-dimensional graph representing the relationship between the pan value and the elapsed time, and the time-tilt graph 430 that is the two-dimensional graph representing the relationship between the tilt value and the elapsed time. The GUI 400 further includes a trajectory point 711 before editing and a trajectory point 712 after editing which are newly added on the pan-tilt graph 410. Fig. 8 is a setting screen in which trajectory points 721 and 731 before change, a trajectory line 713, a trajectory line 723, and a trajectory line 733 before change, a trajectory point 722 and a trajectory point 732 after change, and a trajectory line 724 and a trajectory line 734 after change are newly added to Fig. 7. Fig. 9 illustrates a situation of a change of the control point position when the user adds a trajectory point. A detail of Fig. 9 will be described below.

In step S601, the user request acquisition unit 223 acquires an operation performed by the user on the GUI displayed on the display unit 201. According to which one of the point addition button 405, the point editing button 406, and the point deletion button 407 is in a pressed state, the acquired request information is output to the trace editing unit 224, and the flow proceeds to step S602. For example, in the GUI display example of Fig. 7, an example is illustrated in which the point editing button 406 is in the pressed state. In a case where the user operation performed when the point editing button 406 is in the pressed state is acquired, the user request acquisition unit 223 outputs information indicating on which graph the user operation is executed and information of "point editing" in the "trace editing request" to the trace editing unit 224.

In step S602, the trace editing unit 224 updates the trace information according to the input graph information and the request information. In a case where the request information is "point addition", the user may be requested that information that is not to be acquired from the graph operated by the user is additionally input by the user, or interpolation may be performed.

In a case where the user is requested to perform the input, the trace editing unit 224 outputs a command for requesting the input to the trace information rendering unit 227, and the trace information rendering unit 227 performs control (display control) so as to display a GUI for requesting the user to perform the input on the display unit 201. In a case where interpolation is performed, for example, when the point addition is performed on the pan-tilt graph 410, the information of the trajectory point having the target pan and tilt positions according to the positions designated on the pan-tilt graph 410 is added to the end of the trace information. In the elapsed time of the added trajectory point information, an elapsed time obtained by adding a predetermined time to the elapsed time of the immediately preceding point is set. The control point of the added trajectory point information is set as blank, and the control point at the preceding point is decided by performing piecewise cubic Hermite interpolation by using two or three preceding points. It is noted that for an interpolation method used when the control point is decided, other interpolation methods may be used as long as information used to smoothly connect the added trajectory point with the preceding and succeeding trajectory points can be acquired, such as cubic spline interpolation and Akima interpolation.

In addition, in a case where the user operation indicating "point addition" is acquired on the time-pan graph 420, the trajectory point having the elapsed time and the target pan position according to the position designated on the time-pan graph 420 is added to the trace information. In a case where the designated elapsed time is greater than that at the end of the trajectory point registered in the trace information, the trajectory point is added to the end of the trace information. The target tilt position of the immediately preceding point is set as the target tilt position at this time. The control point of the added trajectory point information is set as blank, and the control point of the preceding trajectory point information is decided by performing piecewise cubic Hermite interpolation by using two or three preceding points. In a case where the designated elapsed time is between any trajectory points of the trajectory points registered in the trace information, the trajectory point is added to the position between the trajectory points of the trace information. The position on the time-tilt trajectory line at the designated elapsed time is set as the target tilt position at this time. A method of calculating the added trajectory point information and a value of the control point of the preceding trajectory point information will be described with reference to Fig. 9.

Fig. 9 illustrates a situation where a new trajectory point is added between the two trajectory points in the time-pan graph 420. A trajectory point 900, a trajectory point 910, a trajectory point 920, a trajectory point 930, and a trajectory point 940 are trajectory points already registered in the trace information, a trajectory point 950 is a trajectory point newly added by the user, and a control point 912 is the control point B1 of the trajectory point information of the trajectory point 910. A control point 921 and a control point 923 are respectively the control points B0 before and after change of the trajectory point information of the trajectory point 920. A control point 922 and a control point 924 are respectively the control points B1 before and after change of the trajectory point information of the trajectory point 920. A control point 931 is the control point B0 of the trajectory point 930. A control point 951 and a control point 952 are respectively the control point B0 and the control point B1 of the trajectory point information of the added trajectory point 950. Here, a method of calculating the control point 951 and the control point 952 of the added trajectory point information and the control point 923 and the control point 924 of the trajectory point information of the previous trajectory point 920 is described.

First, the control point 924 and the control point 951 are decided by performing piecewise cubic Hermite interpolation using the trajectory point 920 and the trajectory point 930 that are the existing preceding and succeeding trajectory points and the added trajectory point 950. With regard to the control point 923, first, a value of a time axis component is calculated so as to meet the following expression. In this equation, a ratio of a time period (T2) from the trajectory point 920 to the control point 921 to a time period (T1) from the trajectory point 920 to the trajectory point 930 and a ratio of a time period (T4) from the trajectory point 920 to the control point 923 to a time period (T3) from the trajectory point 920 to the trajectory point 950 are kept consistent. It is noted that in the following equation, P0 denotes the preceding trajectory point 920, P1 denotes the next trajectory point 930, P2 denotes the added trajectory point 950, B0 denotes the control point 921, and C0 denotes the control point 923.

$$(1)\ (B0t - P0t)/(P1t - P0t) = (C0t - P0t)/(P2t - P0t)$$

Thereafter, values of components in the respective axis directions of pan and tilt are calculated such that a tangent slope at the preceding trajectory point 920 becomes the same as the original.

With regard to the control point 952, first, a value of the time axis component is calculated so as to satisfy the following equation. It is noted that in the following equation, P0 denotes the preceding trajectory point 920, P1 denotes the next trajectory point 930, P2 denotes the added trajectory point 950, B1 denotes the control point 922, and C1 denotes the control point 952.

$$(2)\ (P1t - B1t)/(P1t - P0t) = (P1t - C1t)/(P1t - P2t)$$

Thereafter, values of components in the respective axis directions of pan and tilt are calculated such that a tangent slope at the next trajectory point 930 becomes the same as the original.

Furthermore, in a case where point addition is performed on the time-tilt graph 430, a trajectory point is added similarly as in a case where point addition is performed on the time-pan graph 420.

In a case where the request information is "point editing", the trace information is changed at the position designated by the user on the graph. For example, in a case where the user operation indicating "point editing" is acquired on the pan-tilt graph 410, the positions of the pan and tilt axis components at the trajectory points and the control point of pan and tilt of the relevant trajectory point of the trace information are changed according to the position designated on the pan-tilt graph 410. In a case where a trajectory point is changed, in order for the pan and tilt axis components at the control point to also move in parallel, the positions of the pan and tilt axis components at the control point B0 that is the trajectory point and the control point B1 that is the preceding trajectory point are changed by the same amount as the above-described change amount. In a case where the positions of the pan and tilt axis components at the control point B0 of pan and tilt are changed, the control point B1 that is the preceding point may also be changed in conjunction such that the motion at the trajectory point becomes smooth.

In a case where the control point B1 is changed in conjunction, the value of the time axis component at the control point B1 that is the preceding point is set as the same. Furthermore, the pan and tilt axis components at the control point B1 that is the preceding point are recalculated such that the control point B0 after change, the trajectory point, and the control point B1 that is the preceding point are aligned on a straight line on the time-pan graph 420 and the time-tilt graph 430. In a case where the positions of the pan and tilt axis components at the control point B1 of pan and tilt are changed, the control point B0 that is the next point may also be changed in conjunction such that the motion at the trajectory point becomes smooth. In a case where the control point B0 is changed in conjunction, the value of the time axis component at the control point B0 that is the next point is set as the same. The pan and tilt axis components at the control point B0 that is the next point are recalculated such that the control point B1 after change, the trajectory point that is the next point, and the control point B0 that is the next point are aligned on a straight line on the time-pan graph 420 and the time-tilt graph 430.

In addition, in a case where the user operation indicating "point editing" is acquired on the time-pan graph 420, the target pan position and the elapsed time at the relevant trajectory point of the trace information and the position of the control point are changed.

In a case where the target position is to be changed, the positions of the pan axis component at the control point B0 that is the trajectory point information which has been edited by the same amount as the above-described change amount and the control point B1 that is the preceding trajectory point are changed.

In a case where the elapsed time is to be changed, first, the time axis components at the control point B0 and the control point B1 of the edited trajectory point information and at the control point B0 and the control point B1 that is the preceding trajectory point information are calculated and changed so as to satisfy the equation (1) and the equation (2) described above. Thereafter, with regard to the values of the pan and tilt axis components at the control point B0 and the control point B1 of the edited trajectory point information or the preceding trajectory point information, so as to keep the tangent slope at each trajectory point, values according to the values of the time axis components at the control point B0 and the control point B1 after change are calculated. Furthermore, in a case where the control point is to be changed, when the positions of the pan and tilt axis components are to be changed, the control points that are the preceding and succeeding points may also be changed in conjunction similarly as in a case where the positions of the pan and tilt axis components are changed on the pan-tilt graph 410. Furthermore, in a case where the user operation indicating "point editing" is acquired on the time-tilt graph 430, the trace information is changed similarly as in a case where the user operation indicating "point editing" is acquired on the time-pan graph 420. It is noted that in a case where the preceding trajectory point and the next trajectory point do not exist, only the information of the trajectory point is changed. In addition, in a case where the control point does not exist, no change is made.

In a case where the request information is "point deletion", the information of the trajectory point designated on the graph by the user is deleted from the trace information. At this time, in a case where the trajectory point at the end is deleted, the control point of the trajectory point newly serving as the end is deleted. In a case where a point between a trajectory point and a trajectory point is deleted, the control point of the preceding trajectory point of the deleted trajectory point is recalculated. With regard to the method for the recalculation, by the method of recalculating the value of the control point when the elapsed time at the trajectory point is changed on the time-pan graph 420 described above, the trajectory point in which the elapsed time has been changed is read as the next trajectory point of the trajectory point that has been deleted this time.

After the control corresponding to the request information from the user is performed as described above, the flow proceeds to step S603. In the GUI display example of Fig. 7, since the trajectory point 711 on the pan-tilt graph 410 is changed to the trajectory point 712, the target pan and tilt positions of the trace information at the corresponding trajectory point are changed according to coordinates of the graph.

In step S603, the trajectory line calculation unit 226 calculates a position where the trace information is edited and a trajectory line around the position. In a case where any of pan associated values is changed in the trace information, a time-pan trajectory line between the trajectory point and the next trajectory point is calculated, and in a case where any of tilt associated values is changed, a time-tilt trajectory line between the trajectory point and the next trajectory point is calculated. It is noted that with regard to the trajectory point at which the value of the control point does not exist, the calculation of the trajectory line between the trajectory point and the next trajectory point is not performed. In a case where there are zero trajectory points connected to the trajectory point to which the change has been made, since the trajectory line does not exist, the flow directly proceeds to step S604. Finally, in a segment in which any of the time-pan trajectory line or the time-tilt trajectory line is calculated, the pan-tilt trajectory line is calculated based on the time-pan trajectory line and the time-tilt trajectory line, and the flow proceeds to step S604.

In step S604, the trace information rendering unit 227 performs rendering (display control) on three graphs displayed on the display unit 201 based on the trace information updated in step S602 and the trajectory line calculated in step S603. The trace information rendering unit 227 performs rendering of the pan-tilt trajectory line and pan and tilt coordinates at each trajectory point on the pan-tilt graph 410. The trace information rendering unit 227 performs rendering of the time-pan trajectory line and time and pan coordinates at each trajectory point on the time-pan graph 420. The trace information rendering unit 227 performs rendering of the time-tilt trajectory line and time and tilt coordinates at each trajectory point on the time-tilt graph 430 (display control).

Fig. 8 illustrates a situation where the user moves the respective positions of the trajectory points on the time-pan graph 420 and the time-tilt graph 430 from 721 to 722 and from 731 to 732 in line with the movement of the position of the trajectory point 711 to the trajectory point 712 on the pan-tilt graph 410. In addition, re-rendering is newly respectively performed with regard to the trajectory lines in preceding and succeeding sections of the trajectory point changed in line with the movement of the trajectory points on the three graphs from 713 to 714, from 723 to 724, and from 733 to 734. At this time, to make the correspondence of each trajectory point and the trajectory line easier to understand, a configuration may be adopted in which a color or a shape of a marker is changed for each trajectory point, or a configuration may be adopted in which a color of a line type of each trajectory line is changed for each trajectory point.

In addition, to make a change in the movement of the image capturing apparatus easier to understand when the trajectory point information is edited, display of the trajectory line in a predetermined range may be changed. A configuration may be adopted in which a color of the trajectory line connecting the existing preceding and succeeding trajectory points of the selected trajectory point is distinguished in a section where only pan drive is performed, in a section where both pan and tilt drive is performed, and the like, and a color of the trajectory line is changed depending on a control item in the section. For example, in a case where the trajectory line connecting the preceding trajectory points of the trajectory point selected on the pan-tilt graph 410 is displayed in a color corresponding to the section where only pan drive is performed, when the control point position or the like of the selected trajectory point is changed, the change of the tilt stopped state in the preceding section becomes easier to understand.

Furthermore, in a case where the trajectory points having the same pan and tilt angles exist in the trace information, display may be varied. For example, a configuration may be adopted in which a size of the marker is decreased for one with a slower elapsed time or the marker is displayed (divided) in half in left and right or one-third so that all trajectory points at the same position can be checked at the same time (simultaneous display). A configuration may be adopted in which a before and after relationship of each marker and trajectory line is swapped every few seconds (displayed in a predetermined order). In addition to the above, a configuration may be adopted in which when the trace information becomes long or the like, trajectory points in any range among the trajectory points of the trace information can be selected, and rendering of the trajectory points only in the selected range is performed on the graph.

A configuration may be adopted in which a rendering range is automatically set. For example, a method of performing rendering of the preceding and succeeding trajectory points in a predetermined time period or by a predetermined number of trajectory points added last or the selected trajectory point, a method of performing rendering of either a preceding range or a succeeding range relative to the trajectory points with the same pan and tilt angles (setting of a display range), and the like can be used.

As described above, when an instruction for creating and editing a trace on a predetermined graph from the GUI is accepted, the changed contents of the instructed trace information can be respectively displayed in the pan-tilt graph, the time-pan graph, and the time-tilt graph at the same time. It is noted that in the first embodiment, the embodiment in which only pan and tilt are controlled has been described, but the configuration is not limited to this, and a configuration may be adopted in which zoom is also controlled.

## Second Embodiment

In the first embodiment, the example has been illustrated in which when the instruction for creating and editing the trace information on the predetermined graph is accepted, the instructed changed contents of the trace information are respectively displayed at the same time on the pan-tilt graph, the time-pan graph, and the time-tilt graph. According to a second embodiment, furthermore, control of the trace information rendering unit 227 in a case where the trajectory lines are overlapped with each other on the pan-tilt graph 410 will be described with reference to Fig. 10 and Fig. 11.

For example, when a bicycle race, a track event, or the like is traced, there are situations where specific pan and tilt trajectories are repeated upon trace playback. Furthermore, when the same trajectory is repeatedly traced, there are cases where it is desired to speed up a movement between trajectory points for only a specific action.

According to the control of the first embodiment, when such trace information is created and edited, since the trajectory lines appear to be overlapped with each other on the pan-tilt graph 410, it is difficult for the user to perform the creation and editing. In view of the above, in the present embodiment, a part where the trajectory lines are overlapped is detected, and the trace information rendering unit 227 changes rendering of the overlapped part.

Since the control from step S601 to step S604 is similar to Fig. 6, the description thereof is omitted.

In step S1001, a reference is made to the trace information updated in step S602, and it is determined whether the trace information rendering unit 227 changes the rendering. In Fig. 11, the pan values, the tilt values, and the zoom values at the trajectory point number 1 and the trajectory point number 11 are similar. Furthermore, the pan values, the tilt values, and the zoom values at the trajectory point number 2 and the trajectory point number 11 are similar. In the present embodiment, in a case where the pan values and the tilt values at the trajectory points are matched within a previously set range, it is determined that the trajectory points are matched. Furthermore, in a case where a plurality of continuous trajectory points are matched, it is determined that the trace information rendering unit 227 changes rendering of the trajectory line between the determined control points. When it is determined in step S1001 that the trajectory points are matched, the flow shifts to step S1002. When it is not determined in step S1001 that the trajectory points are matched, the flow shifts to step S604. At this time, a range with which it is determined that the trajectory points are matched or the number of a plurality of continuous trajectory points may be set by the user or may be determined based on an initial setting. In addition, the user may select a parameter indicating a degree of determination, and the trace information rendering unit 227 may perform the determination based on the selection by the user.

In step S1002, the trace information rendering unit 227 performs control to change rendering of the trace information based on the trajectory line created in step S603 and the result determined in step S1001, and the flow shifts to step S604.

At this time, control may be performed such that rendering of only the pan-tilt graph 410 is changed, or control may be performed such that rendering of the trajectory lines in the same range on the time-pan graph 420 and the time-tilt graph 430 is changed.

As an example of rendering change, a color of the trajectory line formed by the trajectory points in an associated range is changed, but the configuration is not limited to this. For example, shapes of two markers of the preceding and succeeding trajectory points of the trajectory point that is determined to be matched may be varied or a style (a dotted line or a broken line) or the like of the trajectory line may be varied to be displayed.

In addition, an overlapped part may be changed to make the overlapped part easier to see by changing a transparency of the trajectory point or the trajectory line.

As described above, in the present embodiment, the part where the trajectory lines are overlapped is detected, and the trace information rendering unit 227 changes rendering of the overlapped part, so that the user can edit the trace by identifying the trace information of the part to be edited.

## Third Embodiment

In the first embodiment, the example has been illustrated in which when the instruction for creating and editing the trace information on the predetermined graph is accepted, the instructed changed contents of the trace information are respectively displayed at the same time on the pan-tilt graph, the time-pan graph, and the time-tilt graph. According to a third embodiment, furthermore, processing of displaying a captured image when the trace information created on the GUI is created and edited will be described.

For example, when the trace information is to be corrected, it is difficult to check what kind of captured image will be acquired at pan, tilt, and zoom positions after correction.

In view of the above, in the present embodiment, furthermore, the trace information can be edited while the captured image is checked.

According to the third embodiment, processing of causing the image capturing apparatus to drive when trace editing is performed on the GUI will be described. Hereinafter, processing of the information processing apparatus 200 according to the third embodiment will be described with reference to Fig. 12, Fig. 13, and Fig. 14.

Fig. 12 illustrates an example of the GUI displayed on the display unit 201 of the information processing apparatus 200. The GUI illustrated in Fig. 12 includes a camera address input unit 1201 and a camera video display unit 1202 in addition to the configuration of the GUI displayed on the display unit 201 illustrated in Fig. 4.

The camera address input unit 1201 is an interface for inputting an IP address of a camera serving as a target of the camera information acquisition unit 220, the image acquisition unit 221, and the PTZ control unit 222.

When the IP address is input, video acquired by the image acquisition unit 221 from the camera is displayed on the camera video display unit 1202. In the present embodiment, the IP address is input, but the configuration is not limited to this. For example, the connected image capturing apparatus may be selected from a dropdown list.

The camera video display unit 1202 is configured to display video acquired by the image acquisition unit 221 from the image capturing apparatus 100 based on the IP address input to the camera address input unit 1201. In the present embodiment, while the information processing apparatus 200 is connected to the image capturing apparatus 100, the captured image of the image capturing apparatus 100 continues to be displayed on the display unit 201, but the configuration is not limited to this. For example, the captured image may be displayed in a case where the user performs the user operation to request image display. In addition, the captured image may be displayed after the pan value, the tilt value, and the zoom value are controlled to a pan value, a tilt value, and a zoom value corresponding to the edited and added trajectory point. In other words, without displaying an image during the drive on the display unit 201, the captured image with the pan value, the tilt value, and the zoom value corresponding to the trajectory point may be displayed.

Fig. 13 and Fig. 14 are flowcharts illustrating a flow of processing of editing (or creating) trace information in any of the graphs of the pan-tilt graph 410, the time-pan graph 420, and the time-tilt graph 430 displayed in the display unit 201. Fig. 13 is a flowchart when a new trajectory point is added to the trace information at the time of creation or editing of the trace information. Fig. 14 is a flowchart when the information of the trajectory point which is registered in the trace information is edited at the time of trace editing. This flowchart starts when the user operates the GUI displayed on the display unit 201 via the input unit 202 and ends when the user updates the trace information.

First, with reference to the flowchart of Fig. 13, processing when the new trajectory point is added to the trace information will be described.

Step S601 is equivalent to the configuration and content described with reference to Fig. 6, and the description thereof will be omitted.

In step S1301, the user request acquisition unit 223 determines whether the acquired request information is "point addition". In the present embodiment, when the point addition button 405 is in the pressed state in the GUI of Fig. 12, in a case where the user performs the user operation via the input unit 202, it is determined that the acquired request information is "point addition". However, the configuration is not limited to this, and it is sufficient when "point addition" is instructed by the user operation. For example, the configuration includes a case where "point addition" is instructed by a voice command, a case where "point addition" is instructed by using a gesture recognition system, a case where a specific swipe operation on a touch screen is performed, a case where a specific shortcut key is pressed on a keyboard, a case where "point addition" is selected from a right click menu of a mouse, a case where a specific icon of a mobile application is tapped, and the like. In a case where the user request acquisition unit 223 determines that the acquired request information is "point addition", the flow shifts to step S602, and when it is not determined that the acquired request information is "point addition", the user request acquisition unit 223 updates the trace information, and the present flowchart ends.

Step S602 is equivalent to the configuration and content described with reference to Fig. 6, and the description thereof will be omitted.

In step S1302, the PTZ control unit 222 converts the information of the trajectory point acquired in step S601 to control information for driving the image capturing apparatus 100 and outputs the control information to the image capturing apparatus 100. Herein, the control information for driving the image capturing apparatus 100 refers to, for example, information of the target pan, tilt, and zoom positions, drive time and drive speed information, and the like. According to this, camera video captured by the image capturing apparatus 100 at the added trajectory point is displayed on the camera video display unit 1202.

Steps S603 and S604 are equivalent to the configuration and content described with reference to Fig. 6, and the description thereof will be omitted.

As described above, the image capturing apparatus can be driven to the PTZ positions instructed when the instruction for point addition is accepted among trace editing options from the GUI.

Subsequently, processing when the information of the trajectory point which is registered in the trace information is to be edited will be described with reference to the flowchart of Fig. 14. This flowchart starts when the user operates the GUI displayed on the display unit 201 via the input unit 202 and ends when the user updates the trace information.

Step S601 is equivalent to the configuration and content described with reference to Fig. 6, and the description thereof will be omitted.

In step S1401, the user request acquisition unit 223 determines whether the acquired request information is "point editing" or "point deletion". In the present embodiment, it is determined that the acquired request information is "point editing" in a case where when the point editing button 406 is in the pressed state on the GUI of Fig. 12, the user performs the user operation via the input unit 202, but the configuration is not limited to this. It is sufficient when "point editing" is instructed by the user operation. For example, the configuration includes a case where "point editing" is instructed by a voice command, a case where "point editing" is instructed by using a gesture recognition system, a case where a specific swipe operation on a touch screen is performed, a case where a specific shortcut key is pressed on a keyboard, a case where "point editing" is selected from a right click menu of a mouse, a case where a specific icon of a mobile application is tapped, and the like.

Similarly, in the present embodiment, it is determined that the acquired request information is "point deletion" in a case where when the point deletion button 407 is in the pressed state on the GUI of Fig. 12, the user performs the user operation via the input unit 202, but the configuration is not limited to this. It is sufficient when "point deletion" is instructed by the user operation. In a case where the user request acquisition unit 223 determines that the acquired request information is "point editing" or "point deletion", the flow shifts to step S1402. On the other hand, when it is not determined that the acquired request information is "point editing" or "point deletion", the user request acquisition unit 223 updates the trace information, and the present flowchart ends.

In step S1402, the PTZ control unit 222 converts information of at least any of the pan value, the tilt value, and the zoom value corresponding to the user operation acquired in step S601 to control information for driving the image capturing apparatus 100 and outputs the control information to the image capturing apparatus 100. Herein, the control information for driving the image capturing apparatus 100 refers to, for example, pan, tilt, and zoom position information, drive time period and drive speed information, and the like. According to this, camera video captured by the image capturing apparatus 100 at the designated trajectory point is displayed on the camera video display unit 1202. In step S1402, information of at least any of the pan value, the tilt value, and the zoom value designated by the user is converted to the control information for driving the image capturing apparatus 100, and after the control information is output to the image capturing apparatus 100, the flow shifts to step S1403.

In step S1403, the user request acquisition unit 223 determines whether the acquired request information is "point deletion". Since the determination method is similar to step S1401, the description thereof is omitted. In a case where the user request acquisition unit 223 determines that the acquired request information is "point deletion", the flow shifts to step S602, and when it is not determined that the acquired request information is "point deletion", the flow shifts to step S1404.

In step S1404, the trace editing unit 224 determines whether or not the operation performed by the user is editing of the trace information. In a case where an operation for changing the position of the trajectory point or the control point is performed by an operation such as drag (step S1404: YES), the PTZ positions of the image capturing apparatus 100 corresponding to the position of the trajectory point or the control point after editing are output to the PTZ control unit 222, and the flow proceeds to S1405. In addition, in a case where the trace information that is not associated with the PTZ positions of the image capturing apparatus 100 is edited such as editing of the elapsed time or editing of white balance, it does not necessarily need to output the PTZ positions to the PTZ control unit 222. In a case where the trace editing unit 224 determines that the operation performed by the user is editing of the trace information, the flow shifts to step S1405. When it is not determined that the operation performed by the user is editing of the trace information (for example, point addition, a moment when the image capturing apparatus 100 is driven to the position corresponding to the position designated on the graph to only check camera video, and the like are conceivable), the flowchart ends. At this time, in a case where the trace information is not edited during a predetermined time period after the graph operation content is acquired in step S601, it may be determined that the operation is not editing of the trace information. In a case where the trace information is not edited during a predetermined time period after the control command is output to the image capturing apparatus 100 in step S1402, it may be determined that the operation is not editing of the trace information.

Step S1405 is equivalent to the configuration and content described in step S602 in Fig. 6, and the description thereof will be omitted. In step S1405, the trace editing unit 224 updates the trace information according to the input graph information and the request information and thereafter shifts to step S1406.

In step S1406, the PTZ control unit 222 transmits the control command to the image capturing apparatus 100 by using the control information input by the trace editing unit 224. Herein, the control information for driving the image capturing apparatus 100 refers to, for example, information of target pan, tilt, and zoom positions, an elapsed time and drive speed information, or the like. According to this, camera video captured by the image capturing apparatus 100 at the added trajectory point is displayed on the camera video display unit 1202. At this time, in a case where the editing content of the trace information determined in step S1404 is editing of the trace information that is not associated with the PTZ positions of the image capturing apparatus 100, such as editing of the elapsed time or editing of white balance, this step does not necessarily need to be executed.

Step S603 and step S604 are equivalent to the configuration and content described with reference to Fig. 6, and the description thereof will be omitted.

As described above, the image capturing apparatus can be driven to the PTZ positions instructed when the instruction to edit the trace from the GUI is accepted. It is noted that according to the second embodiment, the embodiment in which only pan and tilt are controlled has been described, but the configuration is not limited to this, and a configuration may be adopted in which zoom is also controlled.

It is noted that in steps S1402 and S1407, a configuration may be adopted in which when the drive of the image capturing apparatus 100 is ended, such display is performed to make it clear on the GUI displayed on the display unit 201 that the drive is ended (completed) and the image capturing apparatus 100 has arrived at the target position. For example, such display includes a method of superimposing a color or the like of the trajectory point where the image capturing apparatus 100 has arrived to be displayed as a color of a frame of the camera video display unit 1202 or the like. In addition, a configuration may be adopted in which the image acquired by the image acquisition unit 221 when the drive of the image capturing apparatus 100 is ended is stored in the storage unit 203 in association with the trajectory point, or a configuration may be adopted in which the stored images are displayed as a list or the stored images are displayed when the trajectory point is selected.

In addition, a configuration may be adopted in which when the user instructs PTZ positions to which the image capturing apparatus is not to be driven in steps S1402 and S1407, the PTZ positions are changed to positions to which the image capturing apparatus can be driven, and the trace information or the graph display is updated. For example, a configuration may be adopted in which when the positions of the pan and tilt axis components at the control point are changed, in a case where a part of the trajectory line corresponds to an edge of a control range of the image capturing apparatus, graph rendering is performed in conjunction with an actual movement of the image capturing apparatus.

## Fourth Embodiment

In the first embodiment, the example has been illustrated in which when the instruction for creating and editing the trace information on the predetermined graph is accepted, the instructed changed contents of the trace information are respectively displayed at the same time on the pan-tilt graph, the time-pan graph, and the time-tilt graph. According to a fourth embodiment, furthermore, processing of displaying a mark representing the current PTZ positions of the image capturing apparatus on each graph when the trace information created on the GUI is played back will be described. Hereinafter, with reference to Fig. 15 and Fig. 16, processing of the information processing apparatus 200 according to a fourth embodiment will be described.

For example, in a case where the trace information is played back, a position desired to be corrected may be specified while the captured image is checked.

In this manner, when the trace information is played back, under the control of the first embodiment, it is difficult to understand which part is being played back in the series of trace information. In view of the above, in the present embodiment, the current PTZ positions of the image capturing apparatus are displayed on each graph such that the part can be specified at the time of trace playback.

By displaying the pan, tilt, and zoom positions of the image capturing apparatus on the graph representing the movement of the image capturing apparatus as described above, it becomes easier to edit the trace information.

Fig. 15 is a flowchart illustrating a processing flow of the system control unit 204 when the trace created on the displayed graph is played back on the display unit 201. This flowchart starts when the user presses the playback button 404 on the GUI displayed on the display unit 201 via the input unit 202 and ends when playback of the trace ends or the user inputs the trace stop instruction. Fig. 16 illustrates a display example of the GUI on the display unit 201 when the present processing is performed.

In step S1501, the trace playback unit 225 receives the trace playback request input from the user request acquisition unit 223, reads out the trace information stored in the storage unit 203, and transmits a PTZ drive instruction to the PTZ control unit 222 to instruct the image capturing apparatus 100 to perform PTZ drive.

In step S1502, the camera information acquisition unit 220 acquires current PTZ positions of the image capturing apparatus 100 and outputs the current PTZ positions of the image capturing apparatus 100 to the trace information rendering unit 227.

In step S1503, the trace information rendering unit 227 performs rendering of the current PTZ positions of the image capturing apparatus 100 which are input from the camera information acquisition unit 220. The trace information rendering unit 227 further performs rendering of markers representing PTZ positions of the image capturing apparatus 100 during the trace playback based on an elapsed time from the start of the trace playback which is input from the trace playback unit 225. In other words, the trace information rendering unit 227 performs control to display the markers in the three graphs including the pan-tilt graph 410, the time-pan graph 420, and the time-tilt graph 430 displayed on the display unit 201. At this time, a rectangle according to the current zoom size based on the zoom value acquired in step S1502 is also displayed together on the pan-tilt graph 410 (rectangle 1601 in Fig. 16). At this time, in case of zooming in when the trace information is played back, the rectangle size decreases in accordance with zooming in. Similarly, in case of zooming out, the rectangle size increases in accordance with zooming out. In this manner, by displaying the rectangle size during playback of the trace information, it becomes easier for the user to understand the zoom value and perform editing.

In the GUI example of Fig. 16, a marker 1602 representing pan and tilt angles is displayed in each of the pan-tilt graph 410, the time-pan graph 420, and the time-tilt graph 430. In addition, a marker 1603 representing a time period from the start of playback and a pan angle and a marker 1604 representing a time period from the start of playback and a tilt angle are displayed. In addition to this, the rectangle 1601 according to the current zoom size is also displayed on the pan-tilt graph 410.

In step S1504, it is determined whether or not playback of the trace by the information processing apparatus 200 ends.

In a case where the "playback stop" request is input to the user request acquisition unit 223 or playback of the trace up to the end of the trace information stops (S1504: YES), the flowchart ends. In other cases (S1504: NO), the flow returns to S1501.

As described above, when playback of the trace created on the GUI is performed, the mark representing the current PTZ positions of the image capturing apparatus can be displayed on each graph.

It is noted that a configuration may be adopted in which when the information processing apparatus 200 plays back a trace, a color of a frame of the camera video display unit 1202 displayed on the display unit 201 is changed to match a color of the trajectory line in a playback segment of the trace information to clearly display the current playback position. In addition, a configuration may be adopted in which during trace playback, when the trace passes through the trajectory point designated by the user, by causing the frame of the camera video display unit 1202 displayed on the display unit 201 to blink or the like, passing through the trajectory point is highlighted for display.

In addition, in a case where a plot button is prepared on the GUI displayed on the display unit 201 and the plot button is pressed during trace playback of the information processing apparatus 200, pan, tilt, and zoom position information at this time is stored. Furthermore, rendering may be performed on each graph of the pan-tilt graph 410, the time-pan graph 420, and the time-tilt graph 430, and it may be possible to leave an interesting position during trace playback. At this time, the image captured by the image capturing apparatus which is acquired by the image acquisition unit 221 may also be stored together.

In addition, in the present embodiment, at the time of editing of the trace information too, the rectangle 1601 according to the zoom value may be displayed. Since the user drags the rectangle 1601 or designates the rectangle size as described above, by displaying the pan, tilt, and zoom positions of the image capturing apparatus on the graph representing the movement of the image capturing apparatus, it becomes easier to edit the trace information.

In the present embodiment, current PTZ positions of the image capturing apparatus 100 are acquired from the image capturing apparatus 100 when the trace information is played back. Furthermore, rendering of the marker 1602 representing the pan and tilt angles is performed on each of the pan-tilt graph 410, the time-pan graph 420, and the time-tilt graph 430, but the configuration is not limited to this. For example, while the image capturing apparatus 100 and the information processing apparatus 200 are connected so as to be communicable, the current position of the image capturing apparatus 100 is acquired in a predetermined interval.

Furthermore, rendering of the marker 1603 representing the time period from the start of playback and the pan angle is performed on each of the pan-tilt graph 410, the time-pan graph 420, and the time-tilt graph 430. In this case, it is easy to visibly check how far the current PTZ positions and the PTZ positions indicated by the trace information are apart, and when trace playback is performed, it is easy to be aware of which position to edit to obtain any captured image. In addition, when a state is established where playback or editing of the trace can be performed, the current position of the image capturing apparatus 100 is acquired. Furthermore, rendering of the marker 1604 representing the time period from the start of playback and the tilt angle is performed on each of the pan-tilt graph 410, the time-pan graph 420, and the time-tilt graph 430. In this case, even in a case where a communication delay occurs, by performing rendering of the current PTZ positions before trace playback, it is possible to immediately visibly check which position to edit when trace playback is performed.

Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments.

## Claims

**1.** An information processing apparatus (200) comprising:
at least one processor or circuit configured to function as:

a display control unit (227) configured to perform control to simultaneously display first information indicating transition information of a pan angle and a tilt angle of an image capturing apparatus capable of performing pan and tilt drive and second information indicating information of a temporal transition of the pan angle and information of a temporal transition of the tilt angle;
a correction unit (223) configured to perform a correction on any of the first information or the second information; and
an update unit (224) configured to update the first information or the second information based on the correction by the correction unit (223), wherein
in a case where information of the correction indicates a correction on the first information, the display control unit (227) is configured to cause the second information, after being updated, to be displayed, and
in a case where information of the correction indicates a correction on the second information, the display control unit (227) is configured to cause the first information, after being updated, to be displayed.

**2.** The information processing apparatus (200) according to claim 1, wherein
the first information or the second information is a trajectory line including a trajectory point which represents target positions representing a target pan angle and a target tilt angle and information indicating an elapsed time from start of tracing.

**3.** The information processing apparatus (200) according to claim 2, wherein

the correction unit (223) is configured to correct the first information or the second information based on an operation performed by a user on the trajectory point included in any of the first information or the second information.

**4.** The information processing apparatus (200) according to claim 3, wherein the operation includes addition of at least one trajectory point, deletion of the trajectory point, change of a pan angle or a tilt angle corresponding to the trajectory point, change of an arrival time at the trajectory point, and change of the trajectory line.

**5.** The information processing apparatus (200) according to any one of claims 2 to 4, wherein the display control unit (227) is configured to change, according to pan and tilt angles at a selected trajectory point and transitions of pan and tilt angles between trajectory points in a predetermined range from the selected trajectory point, a color and a type of the trajectory line which connects the selected trajectory point and the trajectory points in the predetermined range to display the trajectory line.

**6.** The information processing apparatus (200) according to any one of claims 2 to 4, wherein the display control unit (227) is configured to change at least one of a color and a shape of a marker of the trajectory point after being updated.

**7.** The information processing apparatus (200) according to any one of claims 2 to 4, wherein the display control unit (227) is configured to change at least one of a color and a type of the trajectory line after being updated.

**8.** The information processing apparatus (200) according to any one of the preceding claims, wherein

the display control unit (227) is configured to cause the first information to be displayed in a first information display area as a two-dimensional graph in which a first axis represents a pan angle and a second axis represents a tilt angle, and
the display control unit (227) is configured to cause the second information to be displayed in a second information display area as at least one of a two-dimensional graph in which a first axis represents time and a second axis represents a pan angle and a two-dimensional graph in which a first axis represents time and a second axis represents a tilt angle.

**9.** The information processing apparatus (200) according to claim 8, further comprising:

an identification unit configured to enable identification of a trajectory point and a trajectory line on each graph in the first information display area and the second information display area, wherein
the trajectory point has identification information with which an identification of each of a plurality of trajectory points is enabled, and
the identification unit is configured to change rendering of the trajectory line in a case where identification information of trajectory points is matched among the plurality of trajectory points.

**10.** The information processing apparatus (200) according to claim 9, wherein the identification unit is configured to simultaneously display a plurality of trajectory points by dividing one marker or using different marker sizes for trajectory points having an identical pan angle and an identical tilt angle and having different identification information in the first information display area.

**11.** The information processing apparatus (200) according to claim 9, wherein the identification unit is configured to display markers of trajectory points having an identical pan angle and an identical tilt angle and having different identification information in the first information display area in a predetermined order.

**12.** The information processing apparatus (200) according to claim 8, further comprising:

a setting unit for a display range which is configured to set a display range for the first information display area and the second information display area, wherein
the display control unit (227) is configured to display, following the display range set by the setting unit, a trajectory point and a trajectory line displayed in the first information display area and the second information display area.

**13.** The information processing apparatus (200) according to any one of the preceding claims, wherein

in a case where a correction on the first information is accepted by the correction unit (223), the update unit (224) is configured to change a corresponding pan angle and a corresponding tilt angle to designated values and update the second information based on the corrected first information.

**14.** The information processing apparatus (200) according to any one of claims 1 to 12, wherein in a case where a correction on the second information is accepted by the correction unit (223), the update unit (224) is configured to change target positions of a corresponding pan angle and a corresponding tilt angle or an elapsed time and update the first information based on the corrected second information.

**15.** The information processing apparatus (200) according to any one of claims 1 to 12, wherein in a case where addition of a trajectory point representing a new target position of a pan angle or a tilt angle or an elapsed time to the second information is accepted by the correction unit (223), the update unit (224) is configured to set, as an elapsed time of information of the added trajectory, an elapsed time obtained by adding a predetermined time to an elapsed time at an immediately preceding trajectory point.

**16.** The information processing apparatus (200) according to any one of the preceding claims, wherein the first information and the second information are trace information in which transitions of a plurality of operations on the image capturing apparatus are stored.

**17.** The information processing apparatus (200) according to any one of the preceding claims, wherein the first information or the second information further includes a zoom value.

**18.** A method of controlling an information processing apparatus (200), the method comprising:

performing control to simultaneously display first information indicating transition information of a pan angle and a tilt angle of an image capturing apparatus capable of performing pan drive and tilt drive and second information indicating information of a temporal transition of the pan angle and information of a temporal transition of the tilt angle;
acquiring correction information on any of the first information or the second information; and
updating the first information or the second information based on the correction information, wherein
in a case where the correction information indicates a correction on the first information, the second information, after being updated, is caused to be displayed, and
in a case where the correction information indicates a correction on the second information, the first information, after being updated, is caused to be displayed.

**19.** A computer program comprising instructions which, when the program is executed by a computer, cause the computer to carry out the method of claim 18.

**20.** A computer-readable data carrier having stored thereon the computer program of claim 19.

FIG. 1

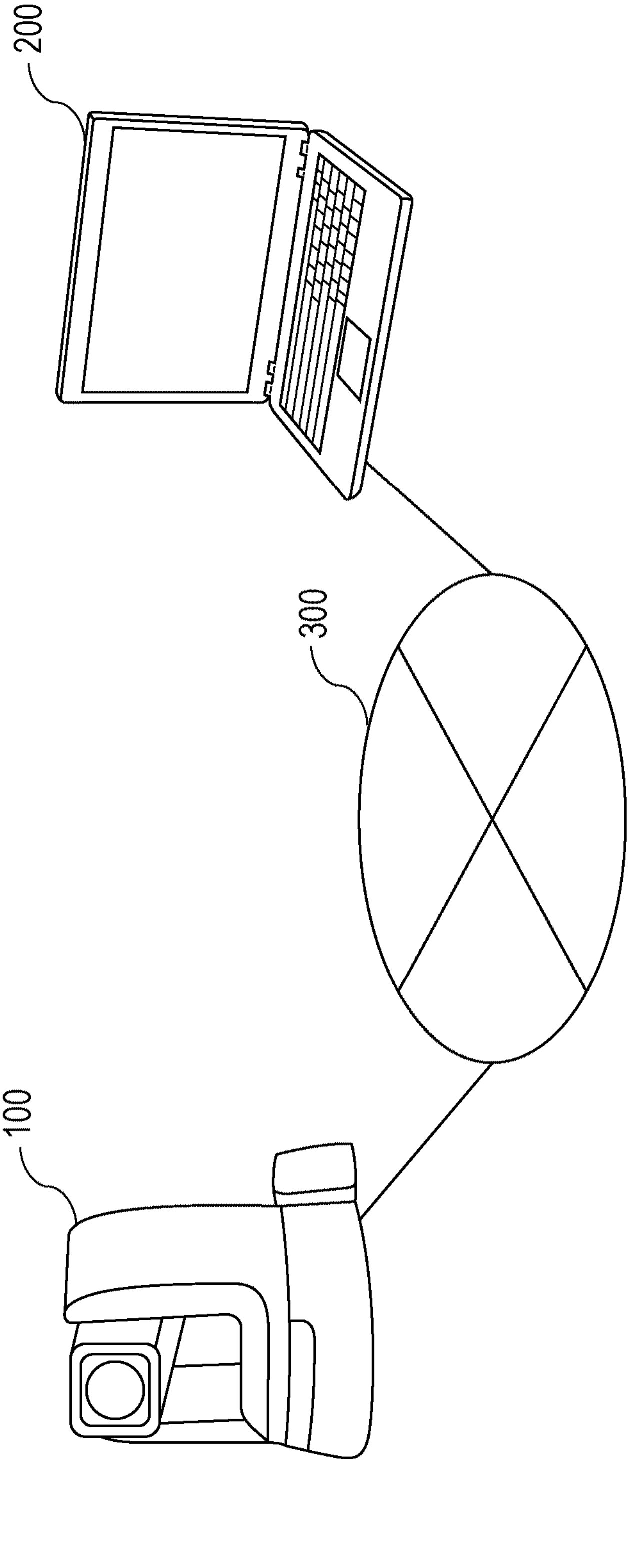

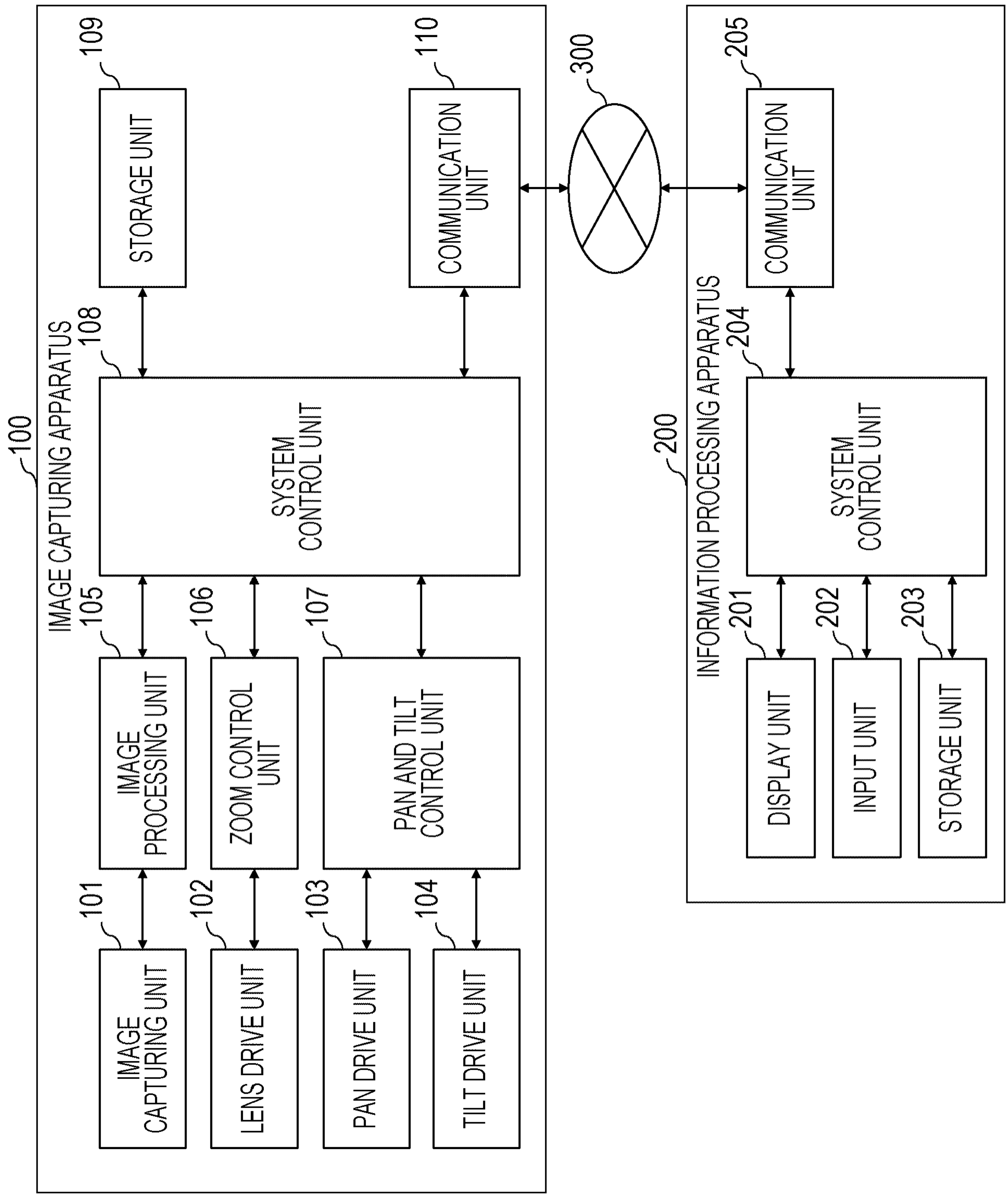
100
IMAGE CAPTURING APPARATUS
101
IMAGE CAPTURING UNIT
102
LENS DRIVE UNIT
103
PAN DRIVE UNIT
104
TILT DRIVE UNIT
105
IMAGE PROCESSING UNIT
106
ZOOM CONTROL UNIT
107
PAN AND TILT CONTROL UNIT
108
SYSTEM CONTROL UNIT
109
STORAGE UNIT
110
COMMUNICATION UNIT
300
200
INFORMATION PROCESSING APPARATUS
201
DISPLAY UNIT
202
INPUT UNIT
203
STORAGE UNIT
204
SYSTEM CONTROL UNIT
205
COMMUNICATION UNIT

FIG. 2

FIG. 3

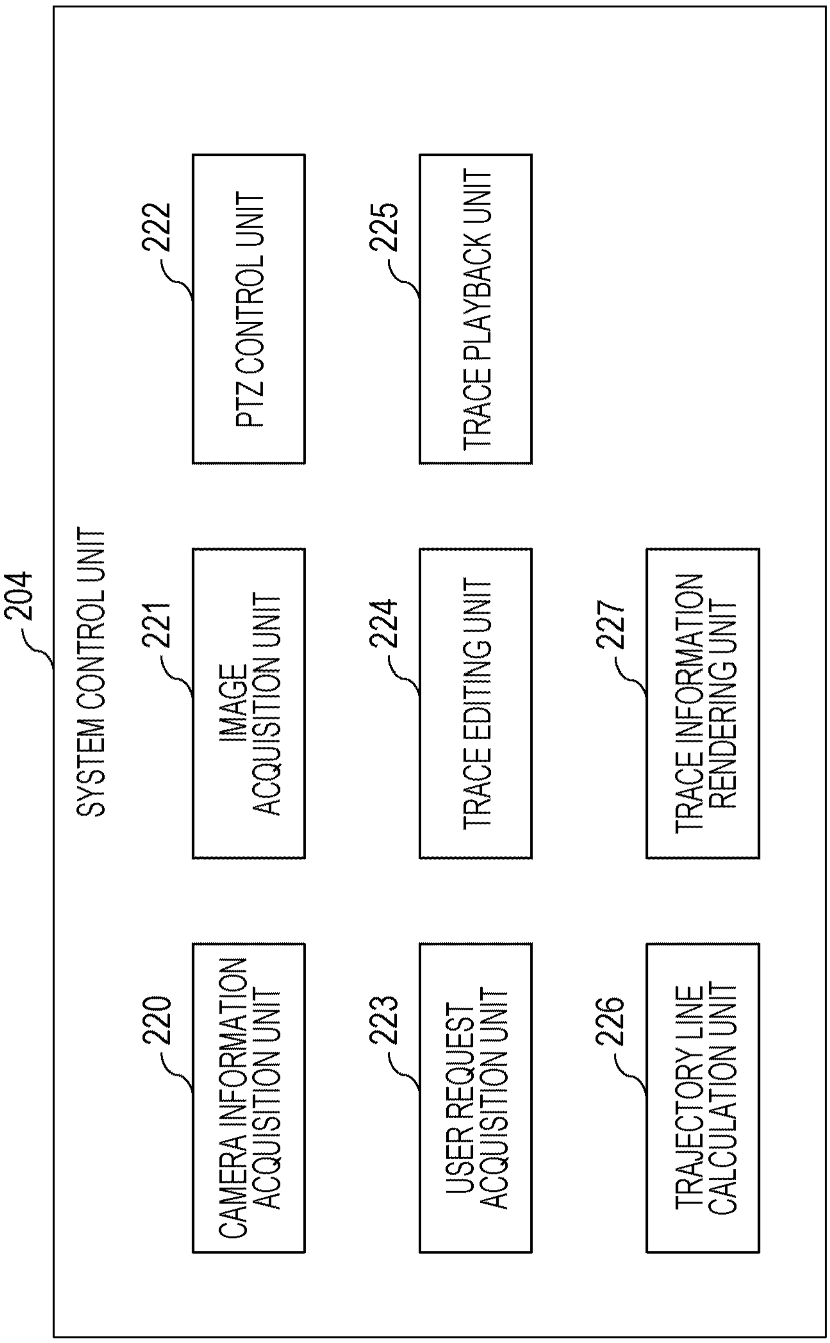

204
SYSTEM CONTROL UNIT
220
CAMERA INFORMATION ACQUISITION UNIT
221
IMAGE ACQUISITION UNIT
222
PTZ CONTROL UNIT
223
USER REQUEST ACQUISITION UNIT
224
TRACE EDITING UNIT
225
TRACE PLAYBACK UNIT
226
TRAJECTORY LINE CALCULATION UNIT
227
TRACE INFORMATION RENDERING UNIT

FIG. 4

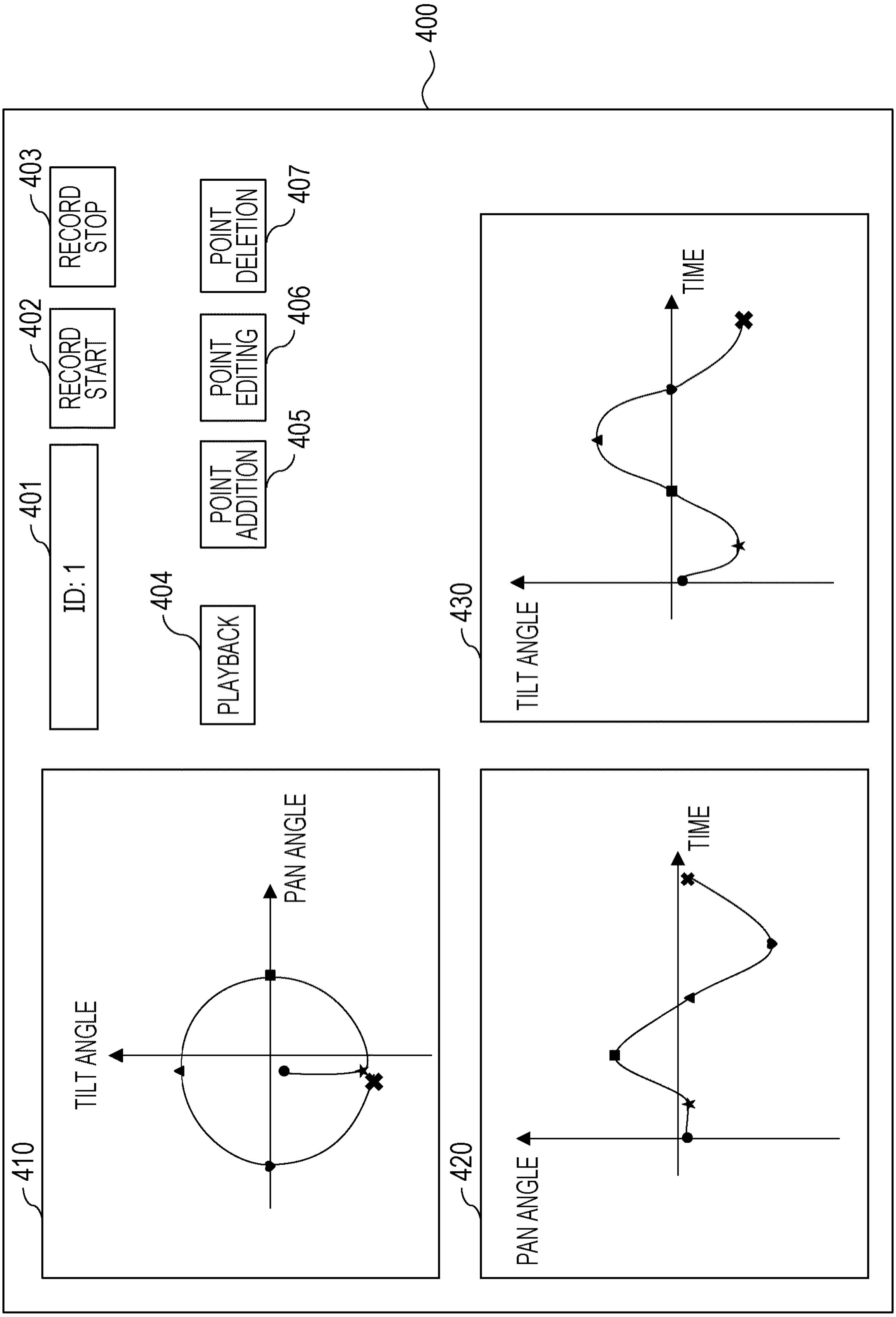
400
401
ID: 1
402
RECORD START
403
RECORD STOP
404
PLAYBACK
405
POINT ADDITION
406
POINT EDITING
407
POINT DELETION
410
TILT ANGLE
PAN ANGLE
420
PAN ANGLE
TIME
430
TILT ANGLE
TIME

# FIG. 5

502 500 503 507 504 508 509 501 505 510 511 506 512

| ID | | 1 | | | | | |
|---|---|---|---|---|---|---|---|
| No | time | PAN | | TILT | | ZOOM | |
| | | position | curve param (B0, B1) | position | curve param (B0, B1) | position | curve param (B0, B1) |
| 1 | 0 | −0.83° | ([1.0, −0.8], [2.0, −4.3]) | −0.9° | ([1.0, −0.9], [1.2, −22.5]) | 73° | ([1.0, 73.0], [2.0, 57.0]) |
| 2 | 3 | −1.3° | ([5.9, 7.4], [5.3, 30.4]) | −26° | ([6.0, −31.6], [6.3, −9.3]) | 60° | ([4.7, 65.1], [6.3, 55.2]) |
| 3 | 8 | 30° | ([10.4, 29.7], [10.2, 8.1]) | −1.3° | ([9.2, 4.2], [9.7, 31.9]) | 55° | ([9.3, 54.8], [10.7, 66.0]) |
| 4 | 12 | 0.05° | ([12.6, −2.8], [13.0, −30.3]) | 32° | ([13.2, 32.1], [13.3, 8.2]) | 60° | ([12.7, 57.0], [13.3, 69.8]) |
| 5 | 14 | −30° | ([15.7, −29.5], [17.8, −7.6]) | −0.46° | ([16.0, −26.6], [17.5, −25.8]) | 70° | ([16.0, 70.5], [18.0, 70.0]) |
| 6 | 20 | −4.3° | — | −26° | — | 73° | — |

FIG. 6

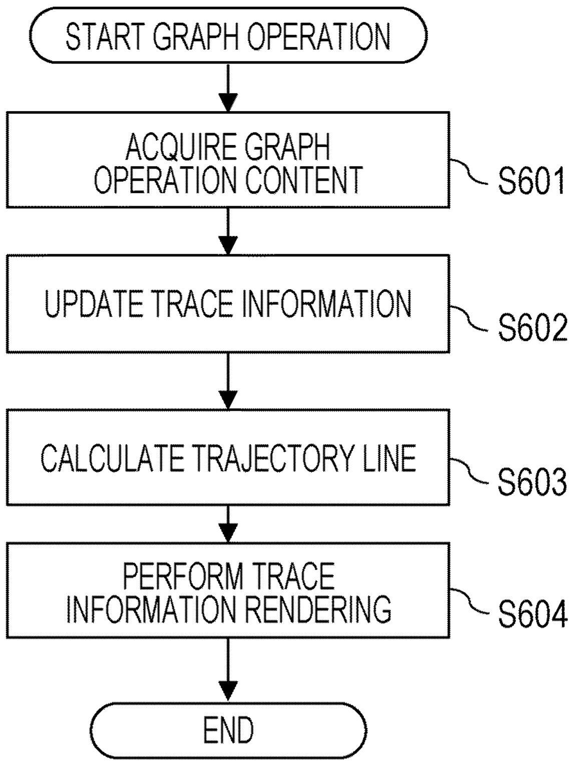
START GRAPH OPERATION
ACQUIRE GRAPH OPERATION CONTENT
S601
UPDATE TRACE INFORMATION
S602
CALCULATE TRAJECTORY LINE
S603
PERFORM TRACE INFORMATION RENDERING
S604
END

FIG. 7

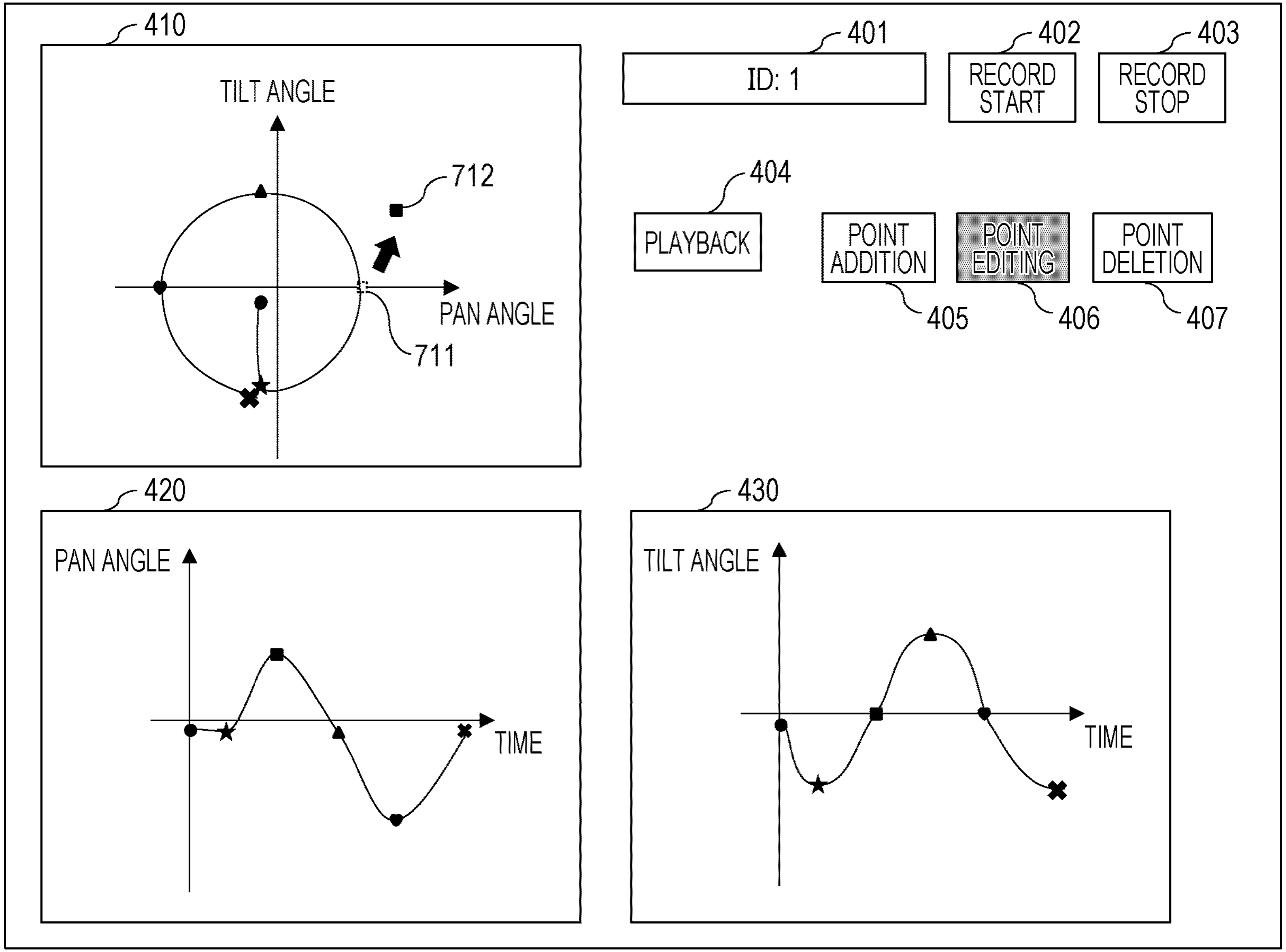
410
TILT ANGLE
PAN ANGLE
711
712
401
ID: 1
402
RECORD START
403
RECORD STOP
404
PLAYBACK
POINT ADDITION
405
POINT EDITING
406
POINT DELETION
407
420
PAN ANGLE
TIME
430
TILT ANGLE
TIME

FIG. 8

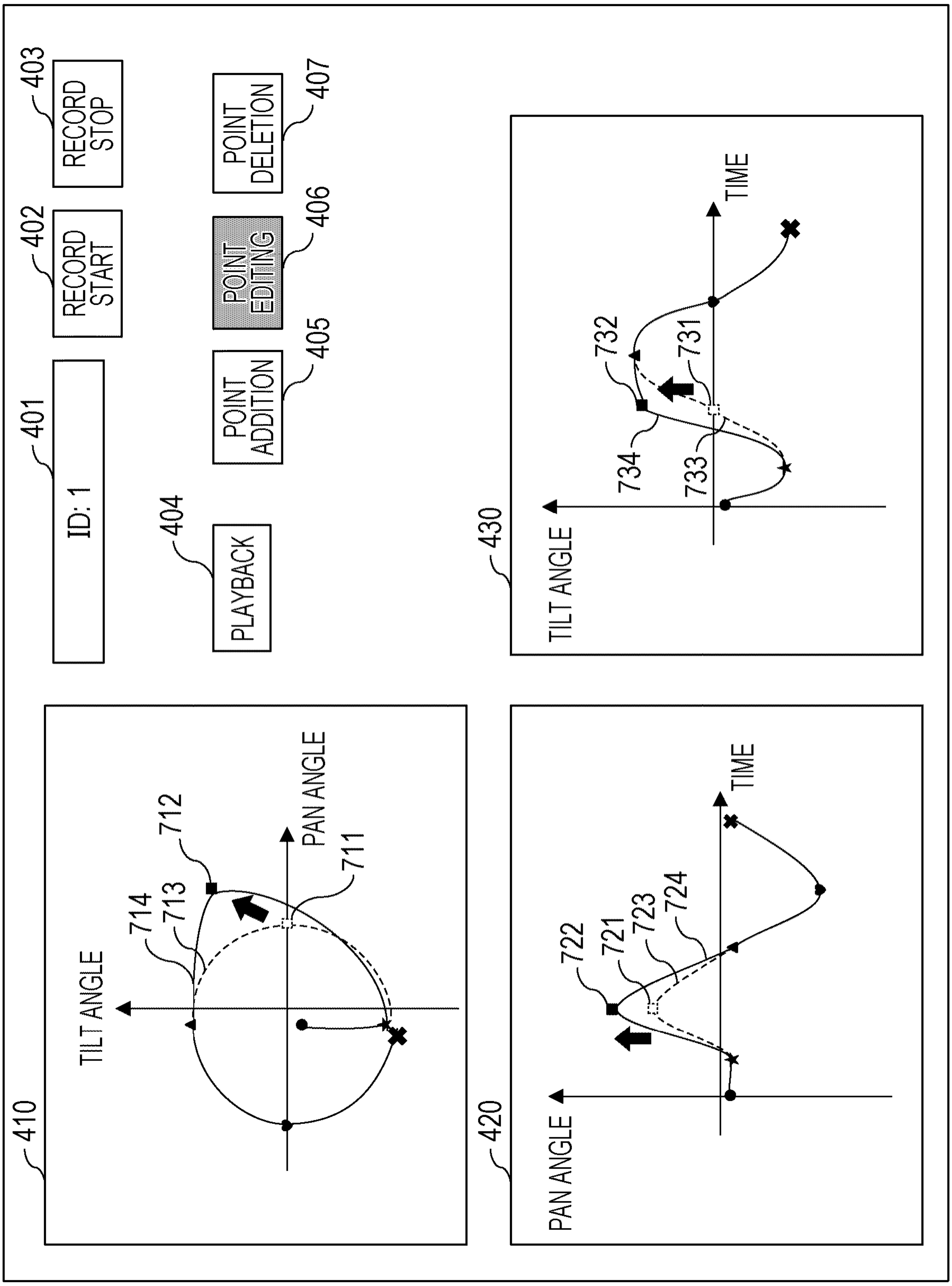
401
ID: 1
402
RECORD START
403
RECORD STOP
404
PLAYBACK
405
POINT ADDITION
406
POINT EDITING
407
POINT DELETION
410
TILT ANGLE
PAN ANGLE
711
712
713
714
420
PAN ANGLE
TIME
721
722
723
724
430
TILT ANGLE
TIME
731
732
733
734

FIG. 9

520

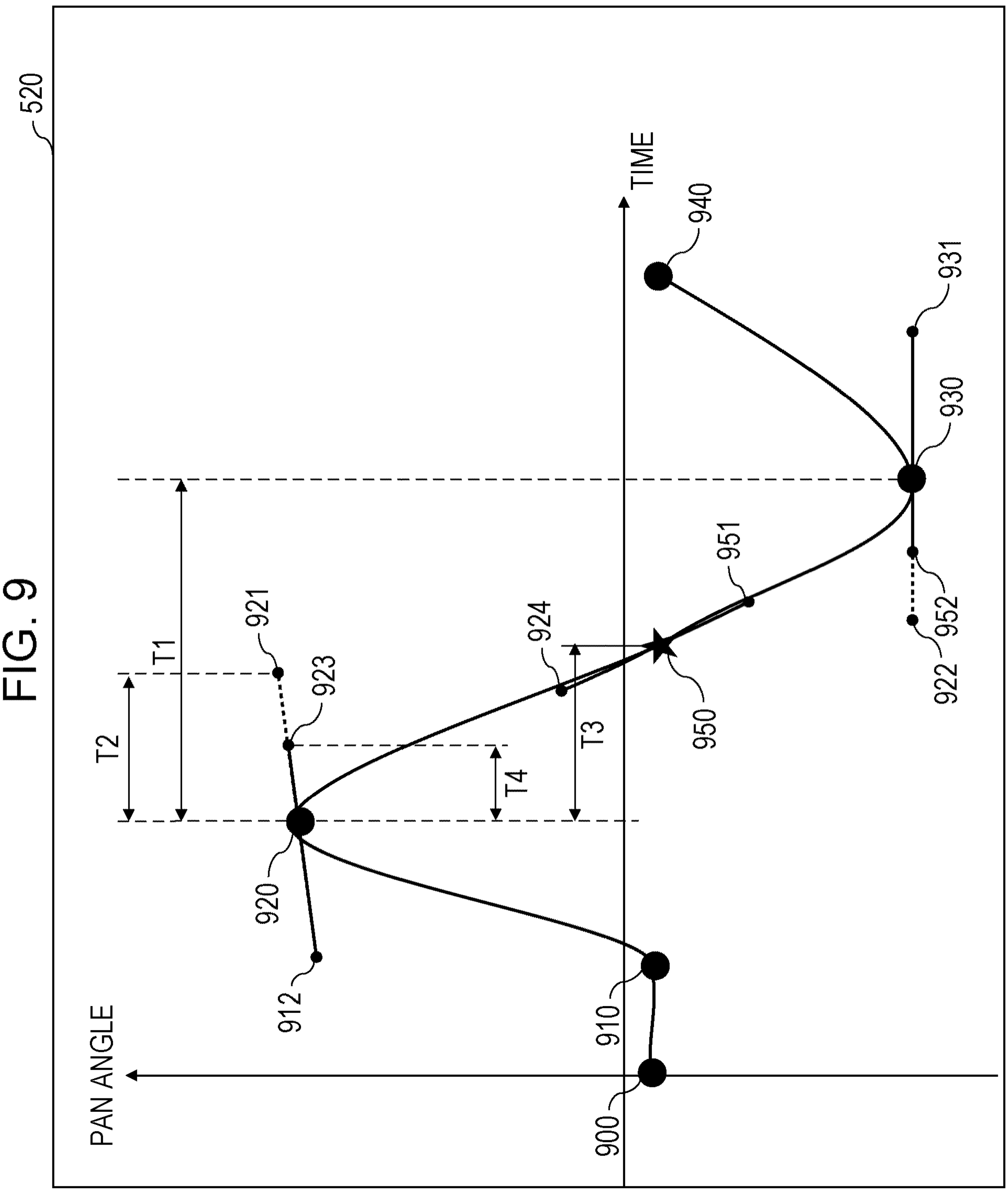
PAN ANGLE
TIME
900
910
912
920
921
922
923
924
930
931
940
950
951
952
T1
T2
T3
T4

FIG. 10

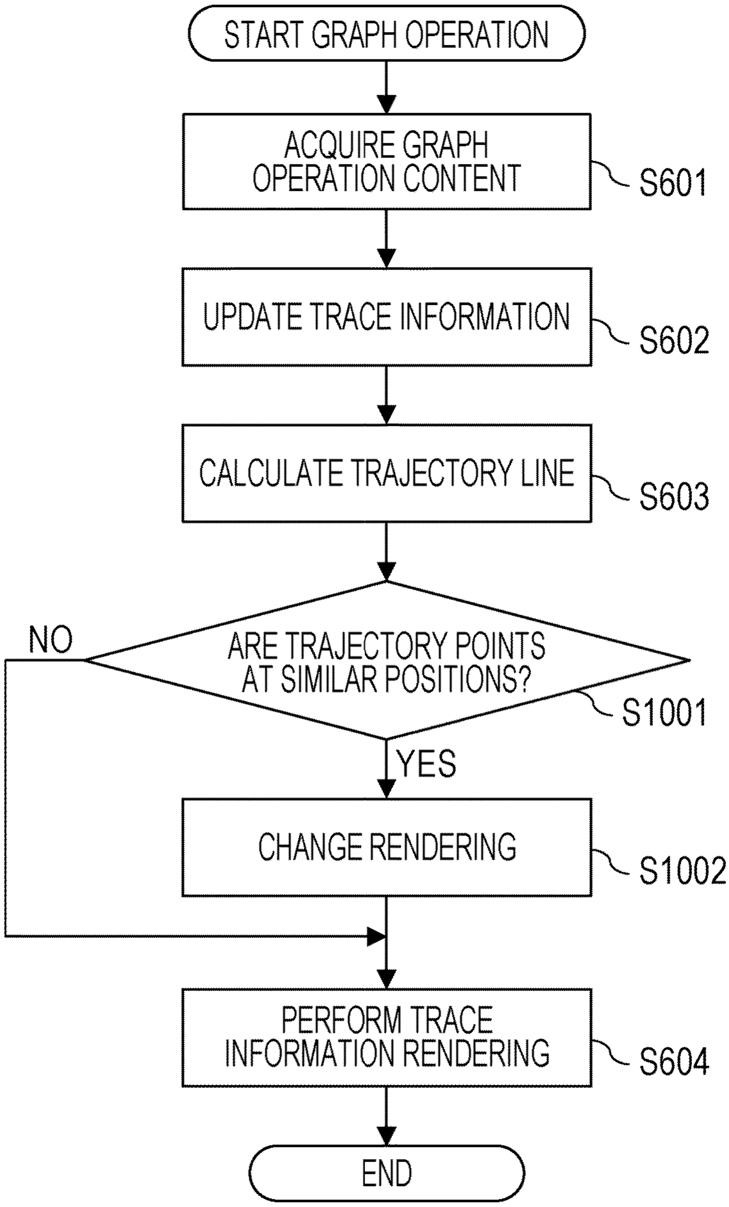
START GRAPH OPERATION
ACQUIRE GRAPH OPERATION CONTENT
S601
UPDATE TRACE INFORMATION
S602
CALCULATE TRAJECTORY LINE
S603
ARE TRAJECTORY POINTS AT SIMILAR POSITIONS?
S1001
NO
YES
CHANGE RENDERING
S1002
PERFORM TRACE INFORMATION RENDERING
S604
END

# FIG. 11

502 500 503 507 504 508 509 501 505 510 511 506 512

| ID | | 1 | | | | | |
|---|---|---|---|---|---|---|---|
| No | time | PAN | | TILT | | ZOOM | |
| | | position | curve param (B0, B1) | position | curve param (B0, B1) | position | curve param (B0, B1) |
| 1 | 0 | −0.83° | ([1.0, −0.8], [2.0, −4.3]) | −0.9° | ([1.0, −0.9], [1.2, −22.5]) | 73° | ([1.0, 73.0], [2.0, 57.0]) |
| 2 | 3 | −1.3° | ([5.9, 7.4], [5.3, 30.4]) | −26° | ([6.0, −31.6], [6.3, −9.3]) | 60° | ([4.7, 65.1], [6.3, 55.2]) |
| ... | ... | ... | ... | ... | ... | ... | ... |
| 11 | 12 | −0.83° | ([1.0, −0.8], [2.0, −4.3]) | −0.9° | ([1.0, −0.9], [1.2, −22.5]) | 73° | ([1.0, 73.0], [2.0, 57.0]) |
| 12 | 14 | −1.3° | ([5.9, 7.4], [5.3, 30.4]) | −26° | ([6.0, −31.6], [6.3, −9.3]) | 60° | ([4.7, 65.1], [6.3, 55.2]) |
| 13 | 20 | −4.3° | — | −26° | — | 73° | — |

FIG. 12

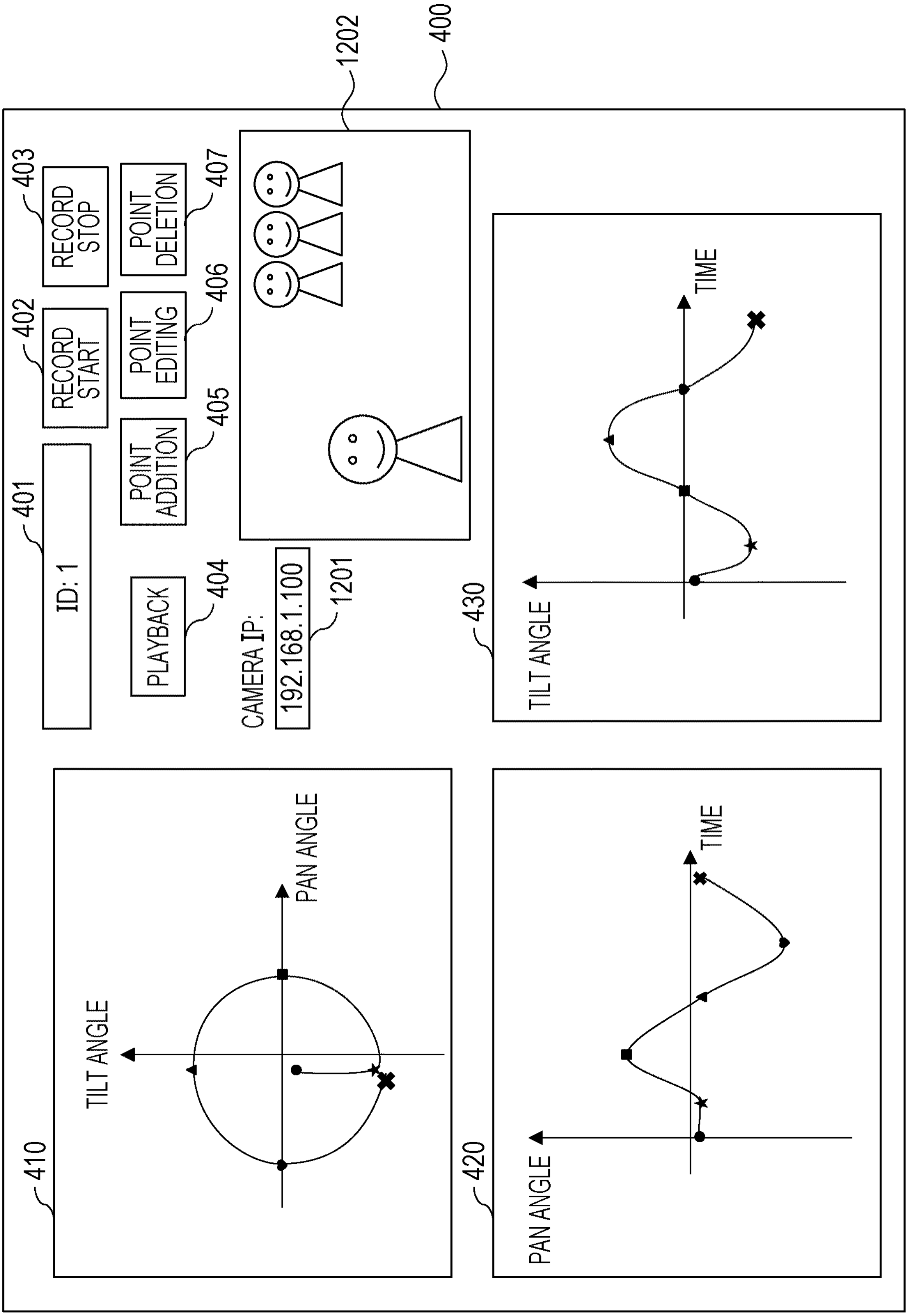

400
1202
401
ID: 1
402
RECORD START
403
RECORD STOP
404
PLAYBACK
405
POINT ADDITION
406
POINT EDITING
407
POINT DELETION
CAMERA IP:
192.168.1.100
1201
410
TILT ANGLE
PAN ANGLE
420
PAN ANGLE
TIME
430
TILT ANGLE
TIME

FIG. 13

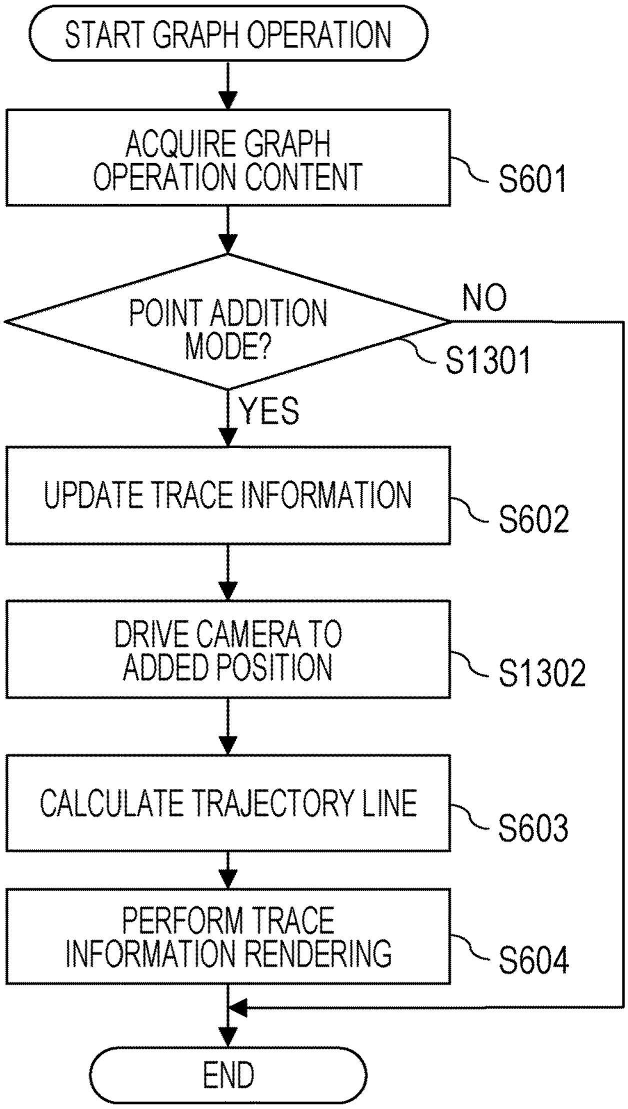
START GRAPH OPERATION
ACQUIRE GRAPH OPERATION CONTENT
S601
POINT ADDITION MODE?
NO
S1301
YES
UPDATE TRACE INFORMATION
S602
DRIVE CAMERA TO ADDED POSITION
S1302
CALCULATE TRAJECTORY LINE
S603
PERFORM TRACE INFORMATION RENDERING
S604
END

FIG. 14

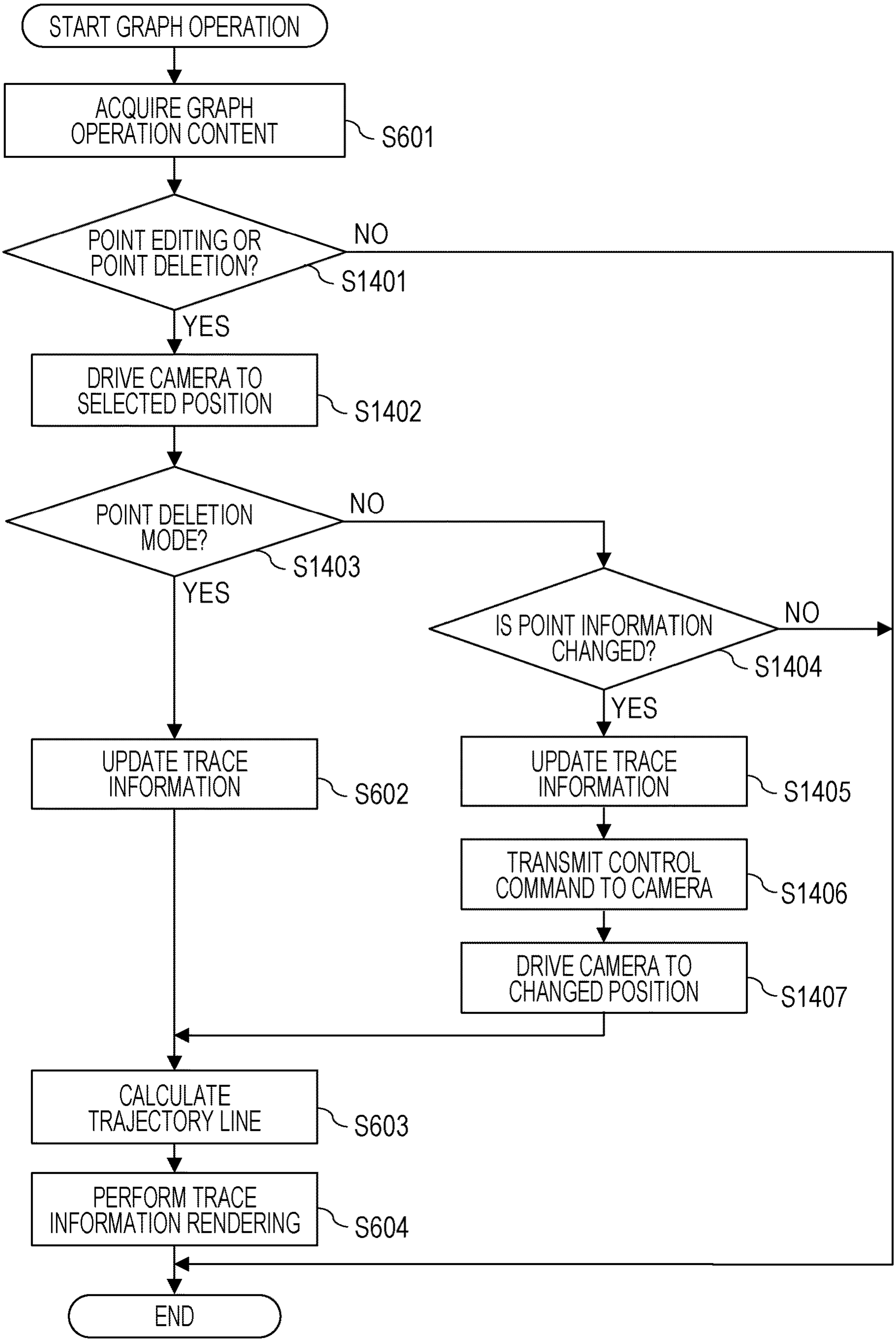
START GRAPH OPERATION
ACQUIRE GRAPH OPERATION CONTENT
S601
POINT EDITING OR POINT DELETION?
S1401
NO
YES
DRIVE CAMERA TO SELECTED POSITION
S1402
POINT DELETION MODE?
S1403
NO
YES
IS POINT INFORMATION CHANGED?
S1404
NO
YES
UPDATE TRACE INFORMATION
S602
UPDATE TRACE INFORMATION
S1405
TRANSMIT CONTROL COMMAND TO CAMERA
S1406
DRIVE CAMERA TO CHANGED POSITION
S1407
CALCULATE TRAJECTORY LINE
S603
PERFORM TRACE INFORMATION RENDERING
S604
END

FIG. 15

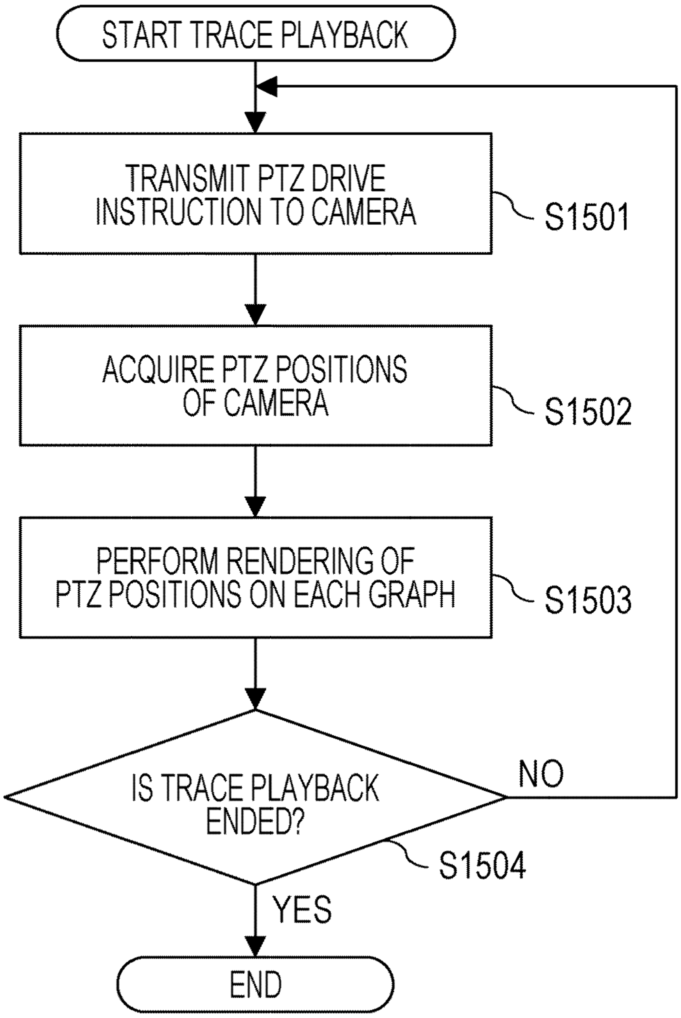
START TRACE PLAYBACK
TRANSMIT PTZ DRIVE INSTRUCTION TO CAMERA
S1501
ACQUIRE PTZ POSITIONS OF CAMERA
S1502
PERFORM RENDERING OF PTZ POSITIONS ON EACH GRAPH
S1503
IS TRACE PLAYBACK ENDED?
NO
S1504
YES
END

FIG. 16

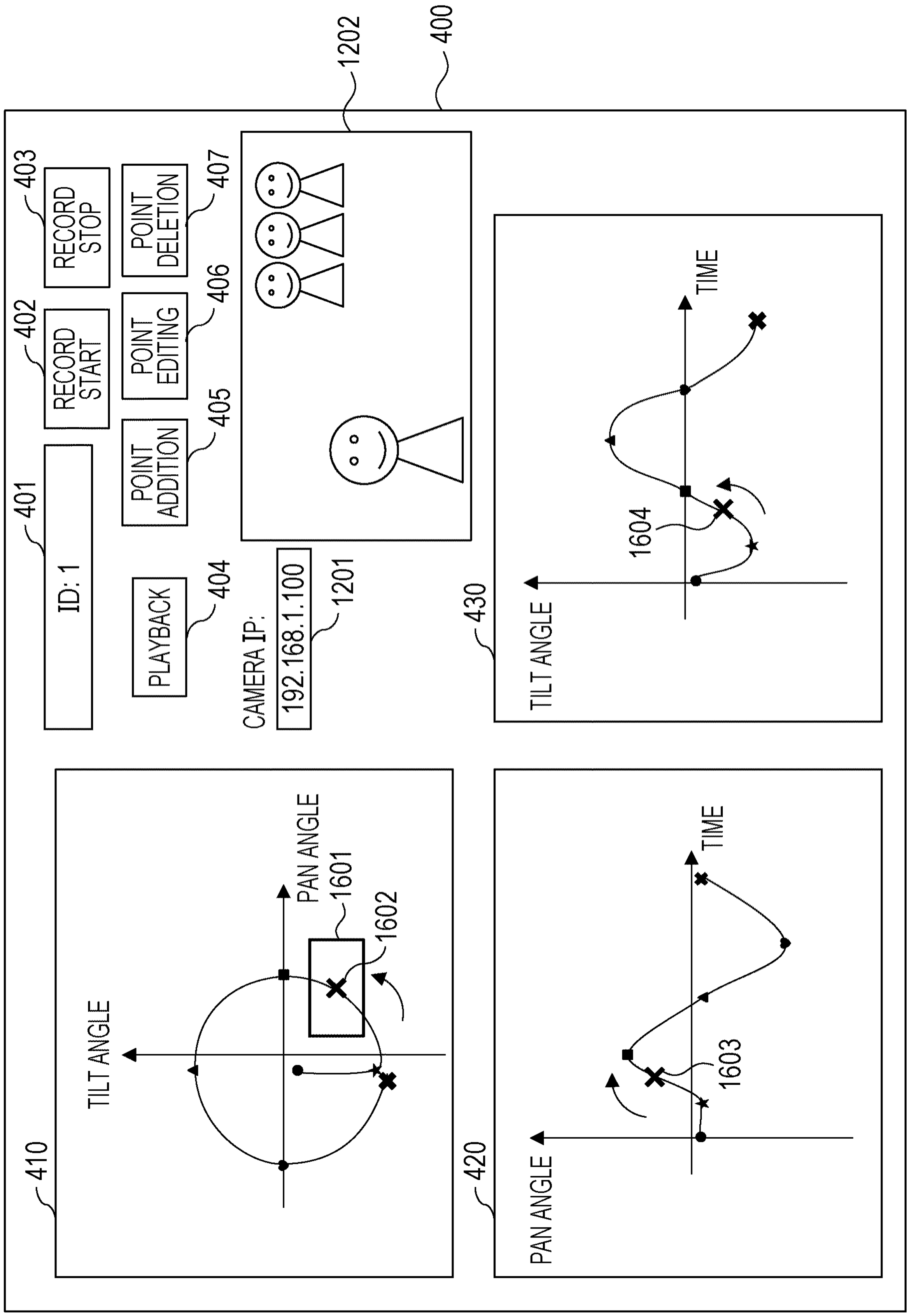
400
1202
401
ID: 1
402
RECORD START
403
RECORD STOP
404
PLAYBACK
405
POINT ADDITION
406
POINT EDITING
407
POINT DELETION
CAMERA IP:
192.168.1.100
1201
410
TILT ANGLE
PAN ANGLE
1601
1602
420
PAN ANGLE
TIME
1603
430
TILT ANGLE
TIME
1604

Europäisches Patentamt
European Patent Office
Office européen des brevets

# EUROPEAN SEARCH REPORT

Application Number
EP 25 21 5731

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2023 117195 A (CANON KK) 23 August 2023 (2023-08-23) * the whole document * ----- | 1-20 | INV. H04N23/63 H04N23/60 H04N23/661 H04N23/69 H04N23/695 |
| A | US 2016/142639 A1 (KIMURA TAKUMI [JP]) 19 May 2016 (2016-05-19) * the whole document * ----- | 1-20 | |
| A | US 2023/007164 A1 (KAMBA MASAKI [JP]) 5 January 2023 (2023-01-05) * the whole document * ----- | 1-20 | |

TECHNICAL FIELDS SEARCHED (IPC)

H04N

The present search report has been drawn up for all claims

| Place of search | Date of completion of the search | Examiner |
|---|---|---|
| The Hague | 15 April 2026 | Rocca, Delphine |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 21 5731

This annex lists the patent family members relating to the patent documents cited in the above-mentioned European search report. The members are as contained in the European Patent Office EDP file on
The European Patent Office is in no way liable for these particulars which are merely given for the purpose of information.

15-04-2026

| Patent document cited in search report | Publication date | Patent family member(s) | Publication date |
|---|---|---|---|
| JP 2023117195 A | 23-08-2023 | NONE | |
| US 2016142639 A1 | 19-05-2016 | JP 2016096481 A | 26-05-2016 |
| | | US 2016142639 A1 | 19-05-2016 |
| US 2023007164 A1 | 05-01-2023 | JP 2023008828 A | 19-01-2023 |
| | | US 2023007164 A1 | 05-01-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2023117195 A